(19) Europäisches Patentamt
European Patent Office
Office européen des brevets

(11) EP 3 013 839 B1

(12) # FASCICULE DE BREVET EUROPEEN

(45) Date de publication et mention de la délivrance du brevet:
**26.05.2021 Bulletin 2021/21**

(21) Numéro de dépôt: **14732184.8**

(22) Date de dépôt: **23.06.2014**

(51) Int Cl.:
***C07F 5/02*** (2006.01) ***G01N 24/08*** (2006.01)
***G01N 21/64*** (2006.01) ***G01N 33/52*** (2006.01)
***G01N 21/79*** (2006.01)

(86) Numéro de dépôt international:
**PCT/EP2014/063147**

(87) Numéro de publication internationale:
**WO 2014/206931 (31.12.2014 Gazette 2014/53)**

(54) **COMPOSÉS MACROCYCLIQUES ET LEURS UTILISATIONS COMME PIÉGEUR D'ANIONS**

MACROCYCLISCHE VERBINDUNGEN ALS ANIONENFALLE

MACROCYCLIC COMPOUNDS AND THEIR USE AS ANION TRAP

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.06.2013 FR 1356002**

(43) Date de publication de la demande:
**04.05.2016 Bulletin 2016/18**

(73) Titulaires:
- **Université d'Aix-Marseille**
  **13007 Marseille (FR)**
- **Centre National de la Recherche Scientifique (C.N.R.S.)**
  **75016 Paris (FR)**

(72) Inventeurs:
- **PARRAIN, Jean-Luc**
  **F-13300 Salon de Provence (FR)**
- **CHUZEL, Olivier**
  **F-13013 Marseille (FR)**
- **TOURE, Momar**
  **St New Haven, Connecticut 06511 (US)**

(74) Mandataire: **Lavoix**
**62, rue de Bonnel**
**69448 Lyon Cedex 03 (FR)**

(56) Documents cités:
- **YI SUN ET AL: "Extending [pi]-Conjugation of Triarylborons with a 2,2-Bpy Core: Impact of Donor-Acceptor Geometry on Luminescence, Anion Sensing, and Metal Ion Binding", INORGANIC CHEMISTRY, vol. 49, no. 10, 17 mai 2010 (2010-05-17), pages 4394-4404, XP055105973, ISSN: 0020-1669, DOI: 10.1021/ic1004159**
- **YAMAGUCHI S ET AL: "COLORIMETRIC FLUORIDE ION SENSING BY BORON-CONTAINING PI-ELECTRON SYSTEMS", JOURNAL OF THE AMERICAN CHEMICAL SOCIETY, ACS PUBLICATIONS, US, vol. 123, no. 46, 21 novembre 2001 (2001-11-21), pages 11372-11375, XP009060437, ISSN: 0002-7863, DOI: 10.1021/JA015957W**
- **NICOLAS CHRISTINAT ET AL: "Multicomponent Assembly of Boronic Acid Based Macrocycles and Cages", ANGEWANDTE CHEMIE INTERNATIONAL EDITION, vol. 47, no. 10, 22 février 2008 (2008-02-22), pages 1848-1852, XP055105891, ISSN: 1433-7851, DOI: 10.1002/anie.200705272**
- **NICOLAS CHRISTINAT ET AL: "A new method for the synthesis of boronate macrocycles", CHEMICAL COMMUNICATIONS, no. 10, 2004, page 1158, XP055105884, ISSN: 1359-7345, DOI: 10.1039/b402510e**

EP 3 013 839 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

• **BURCAK ICLI ET AL: "Dative boron-nitrogen bonds in structural supramolecular chemistry: multicomponent assembly of prismatic organic cages", CHEMICAL SCIENCE, vol. 2, no. 9, 2011, page 1719, XP055105885, ISSN: 2041-6520, DOI: 10.1039/c1sc00320h**

Remarques:

Le dossier contient des informations techniques présentées postérieurement au dépôt de la demande et ne figurant pas dans le présent fascicule.

## Description

La présente invention concerne des composés permettant la détection et/ou le piégeage d'éléments, notamment d'anions et de préférence de monoanions, par exemple issus d'éléments radioactifs.

L'analyse qualitative et quantitative de milieu, par exemple milieux liquides aqueux naturels (nappe phréatique), milieux liquides pollués (par exemple eau polluée), solvant, milieux biologiques, milieux liquides alimentaires (eau, lait, etc), afin d'en déterminer la composition en ions, notamment en anions, peut s'avérer complexe puisqu'il est généralement nécessaire de détecter un par un les différents ions présents.

Il existe par conséquent un besoin de fournir un moyen simple et efficace permettant de détecter et quantifier, facilement et rapidement, les ions, notamment anions et de préférence monoanions, présents dans un milieu.

Par ailleurs, les ions dérivés notamment de l'iode, qui est, par exemple un produit de fission de l'uranium, peuvent être facilement dissous dans l'eau suite à un accident ou incident nucléaire. Ces fuites d'éléments radioactifs peuvent entraîner des niveaux d'exposition aux radiations importants et l'intégration d'éléments radioactifs dans la chaîne alimentaire à partir des eaux contaminées susceptibles d'avoir des conséquences dramatiques en terme de santé publique.

Certains éléments radioactifs sont également utilisés dans le domaine médical, par exemple l'iode est utilisé dans le traitement du cancer de la thyroïde. Cependant, ces utilisations entrainent la production de nombreux déchets, notamment eaux usées ou eaux polluées accidentellement.

Il y a donc un intérêt à fournir des méthodes efficaces permettant de gérer ces déchets radioactifs et notamment permettant de détecter et/ou piéger les ions radioactifs par exemple contenus dans les eaux.

Des molécules organiques ou molécules de cage pour détection ou piégeage des anions sont connues dans l'art antérieur et sont décrites dans: Y. Sun, Inorg. Chem. 2010, 49, 4394-4404; S. Yamaguchi, J. Am. Chem. Soc. 2001, 123, 11372-11375; N. Christinat, Angew. Chem. IEE 2008, 47,1848-1852; N. Christinat, Chem. Comm. 2004, 1158-1159; B. Icli, Chem. Sci. 2011, 2, 1719-1721.

Un objectif de la présente invention est donc de fournir un composé permettant le piégeage d'éléments, notamment d'ions, de préférence d'anions, par exemple de monoanions.

Un objectif de l'invention est encore de fournir un composé permettant le piégeage sélectif d'anion.

Un autre objectif de la présente invention est également de fournir un composé permettant la détection d'éléments, notamment d'anions, dans divers milieux, notamment milieux aqueux.

D'autres objectifs encore apparaîtront à la lecture de la description de l'invention qui suit.

Ces objectifs sont remplis par la présente invention qui a pour objet des composés de formule (I)

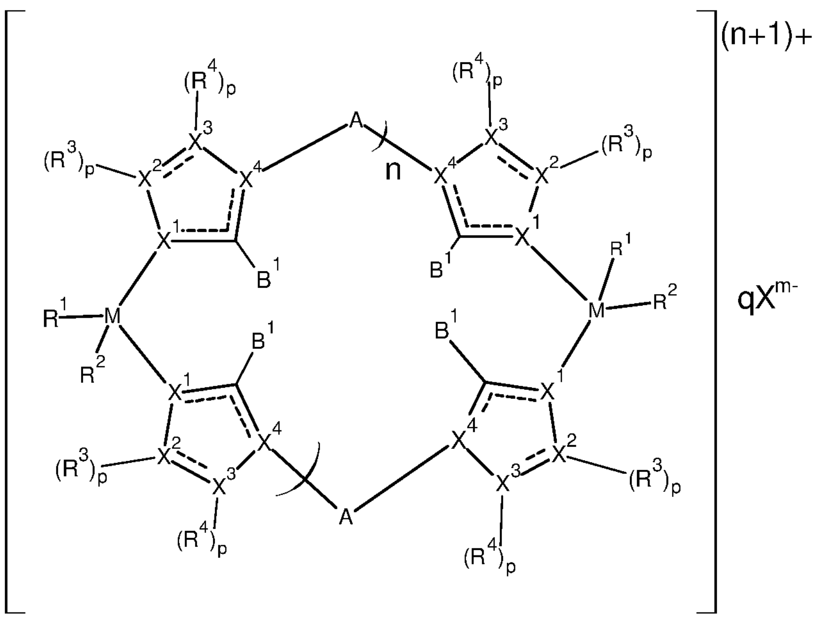

(I)

dans laquelle :

 représente une liaison simple ou une liaison double ;

m représente 1 ou 2 ;
n représente 1, 2 ou 3 ;
p représente 1 ou 2 ;
$X^1$, chacun identique ou différent, représente N;
$X^2$, $X^3$, $X^4$, chacun identique ou différent, représentent C ou N= ;
M, chacun identique ou différent, de préférence identique, représente un métal choisi parmi le bore, et le gallium ;
$R^1$ et $R^2$, chacun identique ou différent, représentent un groupe alkyle, un groupe cycloalkyle, un groupe aryle, un atome d'halogène, ou $R^1$ et $R^2$ forment avec M un monocycle ou un polycycle ou l'un de $R^1$ ou $R^2$ peut être absent ;
$X^{m-}$ représente un groupe trifluorométhylsulfonate ($CF_3SO_3^-$), un groupe $BF_4^-$, un groupe $PF_6^-$, un groupe $SbF_5^-$, un halogénure, un groupe acétate ($CH_3COO^-$), un groupe oxalate ($C_2O_4^{2-}$), un groupe sulfate ($SO_4^{2-}$), un groupe phosphate ($HPO_4^{2-}$), un groupe tartrate ($C_4H_5O_6^-$);
q représente (n+1) ou (n+1)/2 selon que X est respectivement un monoanion (m=1) ou un dianion (m=2) ;
A, chacun identique ou différent, représente un groupe aryle, un groupe hétéroaryle, monocyclique ou polycyclique, optionnellement substitué par un ou plusieurs groupes choisis parmi :

- halogène (F, Cl, Br, I);
- alkyle en $C_1$ à $C_{15}$, de préférence en $C_1$ à $C_{10}$ ;
- ($C_1$-$C_5$)alkyle-aryle, de préférence ($C_1$-$C_5$)alkyle-phényle ;
- ($C_1$-$C_5$)alkyle-hétéroaryle ;
- ($C_1$-$C_5$)alkyle-cycloalkyle ;
- ($C_1$-$C_5$)alkyle-hétérocycle ;
- (($C_1$-$C_5$)alkyle)$_r$-O-(($C_1$-$C_5$)alkyle);
- $B(R^5)_2$;
- $N(R^6)_2$;
- $OR^7$;
- $O(CO)R^7$;
- $N(R^6)_3$+,$T^-$;
- $NO_2$;
- $NHCOR^7$;
- $NHCSR^8$;
- $N=CHN(R^7)_2$;
- CN;
- $COOR^7$;
- $COR^7$;
- $CON(R^7)_2$;
- $COO^-Y^+$;
- $COSR^7$;
- $P(=Z)(R^{10})_2$;

r représente un entier entre 1 et 5, de préférence 1 à 3 ;
$R^5$, identique ou différent, représente H, OH, $R^6$ ;
$R^6$, identique ou différent, représente H, un groupe Oalkyle, un groupe alkyle, un groupe aryle, un groupe hétéroaryle, un groupe OH ; de préférence $R^6$, identique ou différent, représente H, un groupe Oalkyle, un groupe alkyle, un groupe aryle, un groupe hétéroaryle ;
$R^7$, identique ou différent, représente H, un groupe alkyle, un groupe aryle, un groupe hétéroaryle ;
$R^8$, identique ou différent, représente un groupe alkyle, un groupe aryle, un groupe hétéroaryle, $OR^7$, $NR^7$ ;
$R^9$, identique ou différent, représente H, un groupe alkyle, un groupe aryle, un groupe hétéroaryle, un groupe $COR^7$, un groupe $R^7C$=NH ;
$R^{10}$, identique ou différent, représente un groupe $R^6$, un groupe O-aryle, un groupe O-hétéroaryle ;
$T^-$, identique ou différent, représente un halogénure, un sulfonate, un phosphinate, un phosphate, un anion issu du phosphore, par exemple $PF_6^-$; un anion issu de l'antimoine, par exemple $SbF_5^-$ ; un anion issu du bore, par exemple $BF_4^-$ ;
Y, identique ou différent, représente un métal alcalin, un métal alcalino-terreux, un métal de transition, un lanthanide ou un ammonium ;
Z, identique ou différent, représente O, S;
$R^3$ et $R^4$, chacun identique ou différent, représentent

- H;

- Halogène, par exemple F, Cl, Br, I;
- $B(R^5)_2$;
- $N(R^6)_2$;
- $OR^7$;
- $O(CO)R^7$;
- $N(R^6)_3^+,T^-$;
- $NO_2$;
- $NHCOR^7$;
- $NHCSR^8$;
- $N{=}CHN(R^7)_2$;
- CN;
- $COOR^7$;
- $COR^7$;
- $CON(R^7)_2$;
- $COO^-Y^+$;
- $P(=Z)(R^{10})_2$;

ou $R^3$ et $R^4$ forment avec $X^2$ et $X^3$ un groupe cycloalkyle, un groupe hétérocycle, un groupe aryle ou un groupe hétéroaryle ;
$B^1$, chacun identique ou différent, représente H, halogène, $NHR^{11}$, OH ;
$R^{11}$, identique ou différent, représente $R^7$, $COR^7$, $COOR^7$, $Si(R^6)_3$.

Il doit être compris que la valeur de p peut être déterminé par l'homme du métier pour satisfaire la valence des atomes $X^2$, $X^3$.

Il doit être compris que les $X^1$, $X^2$, $X^3$, $X^4$, $B^1$, $R^3$ et $R^4$ peuvent être identiques ou différents à l'intérieur d'un même cycle

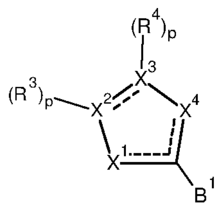

ou identiques ou différents pour former des cycles

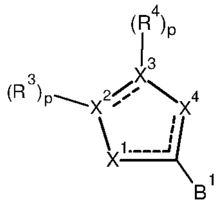

identiques ou différents dans les composés de formule (I). Il doit être compris que les $R^1$, $R^2$ et M peuvent être identiques ou différents pour former des groupes $MR^1$ $R^2$ identiques ou différents dans les composés de formule (I).
Ainsi, il doit être compris que dans les composés de formule (I) les groupes

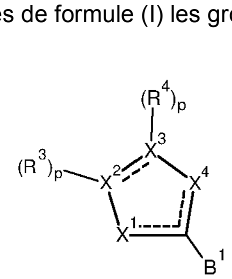

sont tous identiques ou différents. De même il doit être compris que dans les composés de formule (I) les groupes $MR^1$

$R^2$ sont tous identiques ou différents. De même il doit être compris que dans les composés de formule (I) les groupes A sont tous identiques ou différents.

De préférence, dans les composés de formule (I) n représente 1 ou 2, de préférence 1.

De préférence, dans les composés de formule (I), A représente un groupe aryle, notamment en $C_6$ à $C_{12}$ ou un groupe hétéroaryle notamment comprenant de 5 à 13 membres, mono ou polycyclique, éventuellement substitué notamment par un groupe alkyle en $C_1$ à $C_{15}$, de préférence en $C_1$ à $C_{10}$, ($C_1$-$C_5$)alkyle-aryle, de préférence ($C_1$-$C_5$)alkyle-phényle ; ($C_1$-$C_5$)alkyle-hétéroaryle ; ($C_1$-$C_5$)alkyle-cycloalkyle ; ($C_1$-$C_5$)alkyle-hétérocycle ou un groupe -(($C_1$-$C_5$)alkyle)$_r$-O-(($C_1$-$C_5$)alkyle), r représentant un entier entre 1 et 5, de préférence 1 à 3 .

De préférence, dans les composés de formule (I), A représente un groupe aryle, notamment en $C_6$ à $C_{12}$ ou un groupe hétéroaryle notamment comprenant de 5 à 13 membres, mono ou polycyclique, éventuellement substitué notamment par un groupe alkyle en $C_1$ à $C_{15}$, de préférence en $C_1$ à $C_{10}$, ($C_1$-$C_5$)alkyle-aryle, de préférence ($C_1$-$C_5$)alkyle-phényle ; ou un groupe -(($C_1$-$C_5$)alkyle)$_r$-O-(($C_1$-$C_5$)alkyle), r représentant un entier entre 1 et 5, de préférence 1 à 3 .

De préférence, A représente un groupe phényle, un groupe pyridine ou un groupe carbazole éventuellement substitué notamment par un groupe alkyle, notamment en $C_1$ à $C_{15}$, de préférence en $C_1$ à $C_{10}$, ou un groupe -(($C_1$-$C_5$) alkyle)$_r$-O-(($C_1$-$C_5$)alkyle), r représente un entier entre 1 et 5, de préférence 1 à 3. De préférence A représente :

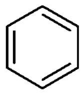 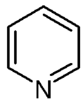 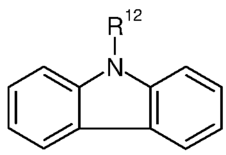,

de préférence

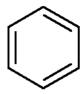 ou 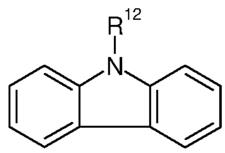,

avec $R^{12}$ représente un groupe alkyle, notamment en $C_1$ à $C_{15}$, de préférence en $C_1$ à $C_{10}$, un groupe ($C_1$-$C_5$)alkyle-aryle, de préférence ($C_1$-$C_5$)alkyle-phényle ou un groupe -(($C_1$-$C_5$)alkyle)rO-(($C_1$-$C_5$)alkyle) avec r représente un entier de 1 à 5, de préférence de 1 à 3.

De préférence, dans le composé de formule (I) $X^{m-}$ représente un groupe trifluorométhylesulfonate, $BF_4^-$, $PF_6^-$ ou $SbF_5^-$ et q représente n+1. De préférence, dans le composé de formule (I) $X^{m-}$ représente un groupe trifluorométhylesulfonate et q représente n+1.

De préférence, dans les composés de formule (I) $X^1$ représente N et $X^2$, $X^3$, $X^4$, chacun identique ou différent, représentent C ou N. Dans un mode de réalisation, dans les composés de formule (I), $X^1$, $X^4$, représentent N et l'un de $X^2$, $X^3$ représente N et l'autre représente C. Dans un autre mode de réalisation et de préférence, dans les composés de formule (I) $X^1$, $X^4$ représentent N et $X^2$, $X^3$ représentent C.

De préférence, dans les composés de formule (I) M représente le bore.

De préférence, dans les composés de formule (I) $R^3$ et $R^4$ représentent H.

De préférence, dans les composés de formule (I) $R^1$ et $R^2$ représentent un groupe alkyle, notamment en $C_1$ à $C_{10}$, par exemple en $C_1$ à $C_5$, ou forment avec M un monocycle par exemple de 5 à 6 membres ou un polycycle par exemple de 9 à 15 membres, de préférence un polycycle. De préférence, dans les composés de formule (I) $R^1$ et $R^2$ représentent un groupe alkyle, notamment en $C_1$ à $C_{10}$, par exemple en $C_1$ à $C_5$, ou $R^1$ et $R^2$ forment avec M un polycycle à 9 membres, de préférence bicyclo[3.3.1]nonan-9-yl formant ainsi le groupe

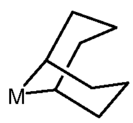,

de préférence

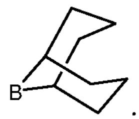.

De préférence, dans les composés de formule (I) $B^1$représente H.

De préférence, dans les composés de formule (I) :

- $X^1$et $X^4$, représentent N ; et/ou
- $X^2$, $X^3$, chacun identique ou différent, représentent C ou N ; et/ou
- $X^1$, $X^4$, représentent N et l'un de $X^2$, $X^3$ représente N et l'autre représente C ; et/ou
- $X^1$, $X^4$, représentent N et $X^2$, $X^3$ représentent C ; et/ou
- M représente le bore ; et/ou
- A représente un aryle, notamment en $C_6$ à $C_{12}$ ou un hétéroaryle notamment comprenant de 5 à 13 membres, mono ou polycyclique, éventuellement substitué notamment par un groupe alkyle en $C_1$ à $C_{15}$, de préférence en $C_1$ à $C_{10}$, un groupe ($C_1$-$C_5$)alkyle-aryle, de préférence ($C_1$-$C_5$)alkyle-phényle ou un groupe -(($C_1$-$C_5$) alkyle)$_r$-O-(($C_1$-$C_5$)alkyle), r représentant un entier entre 1 et 5, de préférence 1 à 3 ; et/ou
- A représente un groupe phényle, un groupe pyridine ou un groupe carbazole éventuellement substitué notamment par un groupe alkyle, notamment en $C_1$ à C15, de préférence en C1 à C10, un groupe ($C_1$-$C_5$)alkyle-aryle, de préférence ($C_1$-$C_5$)alkyle-phényle ou un groupe -(($C_1$-$C_5$) alkyle)$_r$-O-(($C_1$-$C_5$)alkyle), r représentant un entier entre 1 et 5, de préférence 1 à 3 ; et/ou
- A représente :

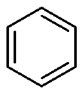 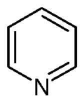 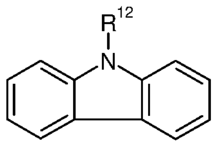,

de préférence

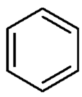 ou 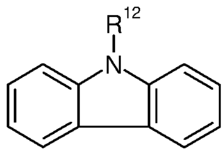,

$R^{12}$ représente un groupe alkyle, alkyle, notamment en $C_1$ à $C_{15}$, de préférence en $C_1$ à $C_{10}$, un groupe ($C_1$-$C_5$)alkyle-aryle, de préférence ($C_1$-$C_5$)alkyle-phényle ou un groupe -(($C_1$-$C_5$)alkyle)$_r$-O-(($C_1$-$C_5$)alkyle) avec r représente un entier de 1 à 5, de préférence de 1 à 3 ;

- p représente 1 ; et/ou
- $R^3$ et $R^4$ représentent H ; et/ou
- n représente 1 ou 2 ; et/ou
- n représente 1 ; et/ou
- M représente le bore ; et/ou
- $R^1$ et $R^2$ représentent un groupe alkyle, notamment en $C_1$ à $C_{10}$, par exemple en $C_1$ à $C_5$, ou forment avec M un monocycle par exemple de 5 à 6 membres ou un polycycle par exemple de 9 à 15 membres, de préférence un polycycle ;
- $R^1$ et $R^2$ représentent un groupe alkyle, notamment en $C_1$ à $C_{10}$, par exemple en $C_1$ à $C_5$, ou $R^1$ et $R^2$ forment avec M un polycycle à 9 membres, de préférence bicyclo[3.3.1]nonan-9-yl ; et/ou
- $B^1$ représente H.

De préférence, le composé de formule (I) est un composé de formule (Ia) :

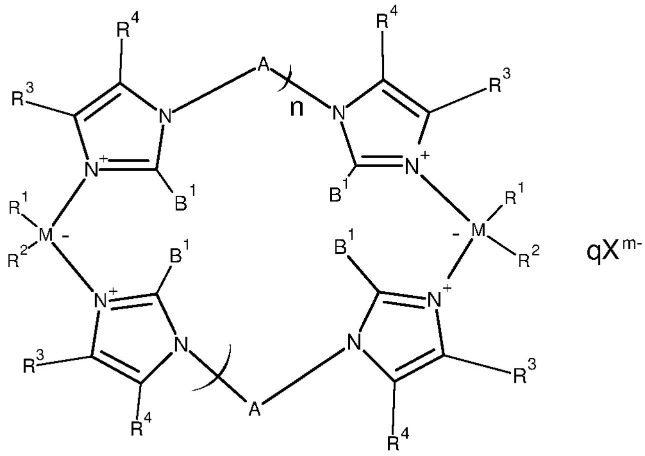

(Ia)

dans laquelle :
$B^1$, A, q, X, m, n, $R^1$ à $R^4$ ont les définitions précitées, M identique représente un métal choisi parmi le bore, l'aluminium et le gallium.
Il doit être compris que dans les composés de formule (Ia) les groupes $R^1$ et $R^2$ sont tous identiques ou différents. Il doit être compris que dans les composés de formule (Ia) les groupes $B^1$ sont tous identiques ou différents. Il doit être compris que dans les composés de formule (Ia) les groupes $R^3$ sont tous identiques ou différents. Il doit être compris que dans les composés de formule (Ia) les groupes $R^4$ sont tous identiques ou différents. Il doit être compris que dans les composés de formule (Ia) les groupes A sont tous identiques ou différents.

De préférence, le composé de formule (I) est un composé de formule (Ib) :

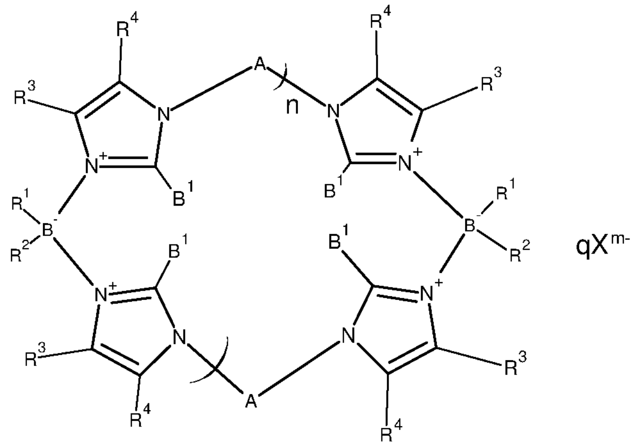

(Ib)

dans laquelle
$B^1$, A, q, m, n, X, $R^1$, $R^2$, $R^3$ et $R^4$ ont les définitions précitées, B représente le bore.

Il doit être compris que dans les composés de formule (Ia) les groupes $B^1$ sont tous identiques ou différents. Il doit être compris que dans les composés de formule (Ia) les groupes $R^1$ sont tous identiques ou différents. Il doit être compris que dans les composés de formule (Ia) les groupes $R^2$ sont tous identiques ou différents. Il doit être compris que dans les composés de formule (Ia) les groupes $R^3$ sont tous identiques ou différents. Il doit être compris que dans les composés de formule (Ia) les groupes $R^4$ sont tous identiques ou différents. Il doit être compris que dans les composés de formule (Ia) les groupes A sont tous identiques ou différents.

De préférence, dans les composés de formule (Ib), $R^1$ et $R^2$ représentent un groupe alkyle, notamment en $C_1$ à $C_{10}$, par exemple en $C_1$ à $C_5$, ou forment avec M un monocycle par exemple de 5 à 6 membres ou un polycycle par exemple de 9 à 15 membres, de préférence un polycycle. De préférence, $R^1$ et $R^2$ représentent un groupe alkyle, notamment en $C_1$ à $C_{10}$, par exemple en $C_1$ à $C_5$, ou $R^1$ et $R^2$ forment avec M un polycycle à 9 membres, de préférence

bicyclo[3.3.1]nonan-9-yl.

De préférence, dans les composés de formule (Ib) $R^3$ et $R^4$ représentent H.

De préférence, dans les composés de formule (Ib) $B^1$représente H.

De préférence, dans les composés de formule (Ib), A représente un aryle ou un hétéroaryle, monocyclique ou polycyclique éventuellement substitué, notamment par un groupe alkyle en $C_1$ à $C_{15}$, de préférence en $C_1$ à $C_{10}$, un groupe ($C_1$-$C_5$)alkyle-aryle, de préférence ($C_1$-$C_5$)alkyle-phényle ou -(($C_1$-$C_5$)alkyle)$_r$-O-(($C_1$-$C_5$)alkyle), r représentant un entier entre 1 et 5, de préférence 1 à 3.

De préférence, dans les composés de formule (Ib), A représente :

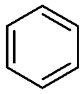 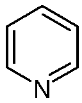 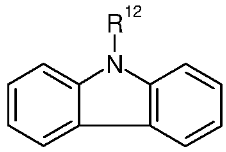,

de préférence

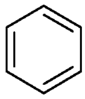 ou 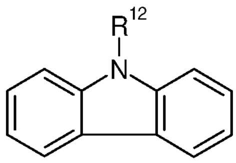,

$R^{12}$ représente un groupe alkyle en $C_1$ à $C_{15}$, de préférence en $C_1$ à $C_{10}$, un groupe ($C_1$-$C_5$)alkyle-aryle, de préférence ($C_1$-$C_5$)alkyle-phényle ou -(($C_1$-$C_5$)alkyle)$_r$-O-(($C_1$-$C_5$)alkyle), r représentant un entier entre 1 et 5, de préférence 1 à 3.

De préférence, dans les composés de formule (Ib), $R^3$ et $R^4$ représentent H, $B^1$, représente H, A représente un aryle ou un hétéroaryle, monocyclique ou polycyclique, éventuellement substitué.

De préférence dans les composés de formule (Ib), $R^3$ à $R^6$ représentent H, $B^1$, $B^2$ représentent H, A représente :

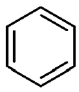 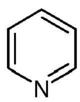 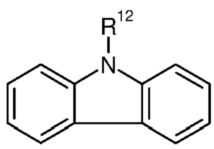,

de préférence

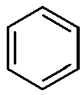 ou 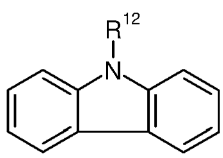,

$R^{12}$ représente un groupe alkyle en $C_1$ à $C_{15}$, de préférence en $C_1$ à $C_{10}$, un groupe ($C_1$-$C_5$)alkyle-aryle, de préférence ($C_1$-$C_5$)alkyle-phényle ou -(($C_1$-$C_5$)alkyle-O)$_q$-O-(($C_1$-$C_5$)alkyle), r représentant un entier entre 1 et 5, de préférence 1 à 3.

De préférence, A représente :

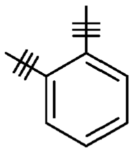 ; 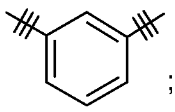 ; 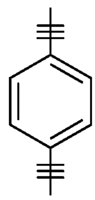 ; 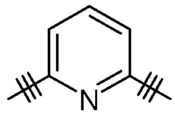 ou 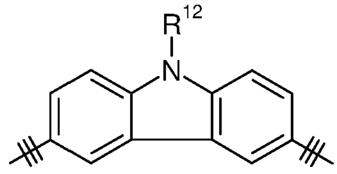

$R^{12}$ représente un groupe alkyle en $C_1$ à $C_{15}$, de préférence en $C_1$ à $C_{10}$, un groupe ($C_1$-$C_5$)alkyle-aryle, de préférence ($C_1$-$C_5$)alkyle-phényle ou un groupe -(($C_1$-$C_5$)alkyle)$_r$-O-(($C_1$-$C_5$)alkyle), r représentant un entier entre 1 et 5, de préférence 1 à 3, 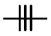 représentant le site de liaison aux atomes d'azote des cycles imidazoles.

De préférence, dans les composés de formule (Ib) n représente 1.

De préférence, dans le composé de formule (Ib) $X^{m-}$ représente un groupe trifluorométhylesulfonate, $BF_4^-$, $PF_6^-$ ou $SbF_5^-$ et q représente n+1. De préférence, dans le composé de formule (Ib) $X^{m-}$ représente un groupe trifluorométhylesulfonate et q représente n+1.

Dans la présente invention, les termes suivants ont les significations ci-après, sauf indication contraire :

- « alkyle » ou « alkyl- » représente une chaîne hydrocarbonée saturée, linéaire ou ramifiée comportant de 1 à 30 atomes de carbone, de préférence de 1 à 15 atomes de carbone, de préférence 1 à 10 atomes de carbone, par exemple 1 à 5 atomes de carbone, et en particulier les groupes méthyle, éthyle, propyle, butyle, pentyle, hexyle, heptyle, octyle, nonyle et décyle ;
- « aryle » ou « aryl- » représente un groupe hydrocarboné aromatique mono ou polycyclique comprenant de 5 à 20 atomes de carbone, de préférence de 5 à 12 atomes de carbone, et par exemple le groupe-phényle ou le groupe naphtyle ;
- « hétéroaryle » ou « hétéroaryl- » représente un groupe -hydrocarboné aromatique mono ou polycyclique, comportant en outre un ou plusieurs hétéroatomes, identiques ou différents, choisis dans le groupe constitué par l'azote, l'oxygène, le soufre et le phosphore, chacun des cycles comportant 5 ou 6 chaînons ; des exemples de groupes hétéroaryles sont les groupes pyridyles, quinolyles, imidazolyles, tétrazolyles, sans que cette liste ne constitue une quelconque limitation ;
- « halogène » désigne le fluor, le chlore, le brome et l'iode.
- « cycloalkyle » ou « cycloalkyl-» représente un groupe alkyle cyclique de 3 à 30 atomes de carbone. A titre d'exemple on peut citer cyclopropyle, cyclobutyle, cyclopentyle, cyclohexyle, méthylcyclohexyle, etc.
- « hétérocycle » représente un groupe cyclique saturé ou insaturé comprenant entre 3 et 10 atomes de carbones et entre 1 et 3 hétéroatomes, de préférence azote, oxygène, soufre ; à titre d'exemple on peut citer le tétrahydrofuranne.

Également décrit ci-après est un procédé de préparation des composés de formule (I) comprenant la réaction entre n+1 composé de formule (II) et n+1 un composé de formule (III) :

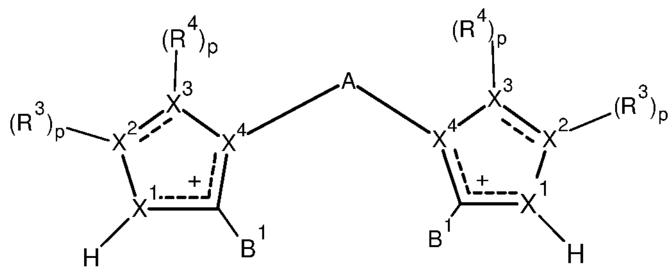 (II) ;

$MR^1R^2X$ (III), les n, p, M, A, $R^1$, $R^2$, $R^3$, $R^4$, $B^1$, X, $X^1$, $X^2$, $X^3$ et $X^4$ étant tels que définis ci-dessus.

De préférence, le procédé est mis en œuvre à une température comprise entre 80°C et 150°C.

De préférence, le procédé est mis en œuvre en présence d'un solvant, par exemple choisi parmi l'acétone, l'acétonitrile, le diméthylformamide, la N-méthylpyrolidone, le tétrahydrofuranne, le dichloroéthane, le dichlorométhane, le toluène, le trifluorméthylbenzène, le diméthylsulfoxyde.

La présente invention a également pour objet l'utilisation des composés de formule (I) pour la détection d'anions. De préférence, dans le cadre de la présente invention, les anions sont des monoanions. De préférence, dans le cadre de la présente invention, les anions sont choisis parmi les halogénures, les carboxylates, les nitrates. De préférence,

les anions sont choisis parmi les halogénures et les carboxylates. De préférence, les anions sont des anions pour lesquels la charge négative est centrée sur un seul atome et non délocalisée, par exemple les halogénures (bromure, chlorure, fluorure, iodure) ou sur deux atomes par exemples les carboxylates.

Sans vouloir être lié par une quelconque théorie, les anions vont entrer à l'intérieur de la cage formée par les composés de formule (I), (la) ou (Ib) selon l'invention et vont être stabilisés à l'intérieur de cette cage par des liaisons hydrogène et interactions électrostatiques. L'analyse par spectrométrie de masse en mode positif va permettre de déterminer la nature de l'anion et de le quantifier.

Également décrit ci-après est une méthode d'analyse qualitative et quantitative d'un milieu, notamment milieu liquide, comprenant la mise en contact du milieu avec des composés de formule (I) selon l'invention et l'analyse du milieu obtenu par spectrométrie de masse. Le milieu peut être tout milieu liquide par exemple milieu naturel (rivière, source, nappe phréatique), milieu alimentaire (eau, lait), milieu biologique, milieu pollué (par exemple eaux polluées par des éléments chimiques, radioactifs,...), solvants, etc. De façon avantageuse, l'utilisation d'un excès de composés selon l'invention dans le milieu à analyser par rapport à la composition en anions supposée dudit milieu permet en une seule injection de détecter et quantifier chacun des anions, de préférence monoanions.

L'invention concerne également l'utilisation des composés selon l'invention pour l'analyse qualitative et quantitative d'un milieu, de préférence milieu liquide.

L'invention concerne également l'utilisation des composés selon l'invention pour le piégeage d'anions dans un milieu, notamment milieu liquide, de préférence de monoanions, notamment radioactifs.

Dans le cadre de la présente invention il doit être compris que le piégeage peut être réversible comme cela est explicité plus loin.

De façon avantageuse, selon la structure du composé de formule (I) et notamment selon la nature de A, les anions vont pouvoir être piégés de manière sélective et éventuellement réversible.

De préférence, l'invention a pour objet l'utilisation des composés de formule (I), (la) ou (Ib), de préférence (Ib), dans lesquelles A représente un groupe phényle ou pyridine pour la détection et le piégeage d'anions chlorure, fluorure ou acétate.

De préférence, l'invention a pour objet l'utilisation des composés de formule (I), (Ia) ou (Ib), de préférence (Ib), dans lesquelles A représente un groupe carbazole pour la détection et le piégeage de l'ion iodure.

Sans vouloir être lié par une quelconque théorie, les anions vont entrer à l'intérieur de la cage formée par les composés de formule (I), (la) ou (Ib) selon l'invention et vont être stabilisés à l'intérieur de cette cage par des liaisons hydrogène et des interactions électrostatiques.

La capacité qu'ont les composés de l'invention à piéger les anions permet également de manière avantageuse de pouvoir les utiliser dans le traitement de différents milieux, notamment dans le traitement des eaux usées ou polluée, notamment polluée par des éléments radioactifs, par exemple par l'iodure de césium.

Également décrit ci-après est un procédé de traitement d'eaux usées ou polluées, notamment par des éléments radioactifs, comprenant l'ajout dans le milieu à traiter d'un composé de formule (I) selon l'invention. De préférence, le procédé de traitement est un procédé de dépollution, notamment d'élimination des anions radioactifs pouvant être contenus dans les eaux usées. De préférence, l'invention a pour objet l'utilisation des composés de formule (I), (la) ou (Ib), de préférence (Ib), dans lesquelles A représente un groupe phényle ou pyridine pour le piégeage et l'élimination d'anions chlorure, fluorure ou acétate.

De préférence, l'invention a pour objet l'utilisation des composés de formule (I), (la) ou (Ib), de préférence (Ib), dans lesquelles A représente un groupe carbazole pour pour le piégeage et l'élimination d'ions iodure.

De manière avantageuse, les composés de l'invention peuvent être greffés sur un support, par exemple support solide, cela permet de façon avantageuse de pouvoir, par exemple par filtration, récupérer les composés de l'invention ayant piégé le ou les anion(s) souhaité(s). Le greffage est réalisé de manière classique connue de l'homme du métier notamment sur des surfaces de type silice, or ou graphène (nanotube de carbone) ou polymère.

De façon avantageuse, le piégeage peut être réversible. Cette réversibilité peut être particulièrement avantageuse lorsque l'on veut extraire un anion d'un milieu pour pouvoir ensuite le récupérer. Afin de récupérer l'anion piégé dans un composé selon l'invention, il convient de mettre le complexe composé selon l'invention/anion dans une solution d'un sel d'un autre anion, l'autre anion étant préférentiellement choisi parmi les anions cités ci-dessus et étant différent de l'anion déjà piégé dans le composé de l'invention. La solution comprenant un sel d'un autre anion peut par exemple être une solution de chlorure, d'iodure, de bromure, de fluorure... ; par exemple iodure de potassium, chlorure de lithium. La concentration en l'autre anion dans la solution dépend de la constante d'association entre l'anion piégé et le composé de l'invention. De façon générale, plus la constante d'association sera élevée plus il conviendra d'avoir une concentration en l'autre anion importante.

La figure 1 représente le déplacement chimiques du proton de l'imidazolium du composé 1·2Br en ppm (abscisse) en fonction du nombre d'équivalent de composé 1·2I ajouté (ordonné).

La figure 2 représente le déplacement chimiques du proton en position 2 du 1,3-bisimidazolium-phényle du composé

1-2Br en ppm (abscisse) en fonction du nombre d'équivalent de composé 1·2I ajouté (ordonné).

La figure 3 représente le déplacement chimiques du proton en position 2 de l'imidazolium du composé 1·2Br en ppm (abscisse) en fonction du nombre d'équivalent d'iodure de potassium ajouté (ordonné).

La figure 4 représente le déplacement chimiques du proton en position 2 de l'imidazolium du composé 1·2Br en ppm (abscisse) en fonction du nombre d'équivalent d'iodure de potassium ajouté (ordonné).

La figure 5 représente le déplacement chimiques du proton en position 2 de l'imidazolium du composé 1·2Cl en ppm (abscisse) en fonction du nombre d'équivalent d'iodure de potassium ajouté (ordonné).

La figure 6 représente le déplacement chimiques du proton en position 2 de l'imidazolium du composé 1•2Cl en ppm (abscisse) en fonction du nombre d'équivalent d'iodure de potassium ajouté (ordonné).

La figure 7 représente les déplacements chimiques des protons du composé 1·21 avant et après ajout de chlorure de lithium (1er graphique déplacement chimique avant ajout, 2ème graphique déplacement chimique après ajout).

La présente invention va maintenant être décrite à l'aide d'exemples n'en limitant pas sa portée.

**Exemple** 1 : **Préparation de composés de formule (I) selon l'invention**

**Composé** 1 :

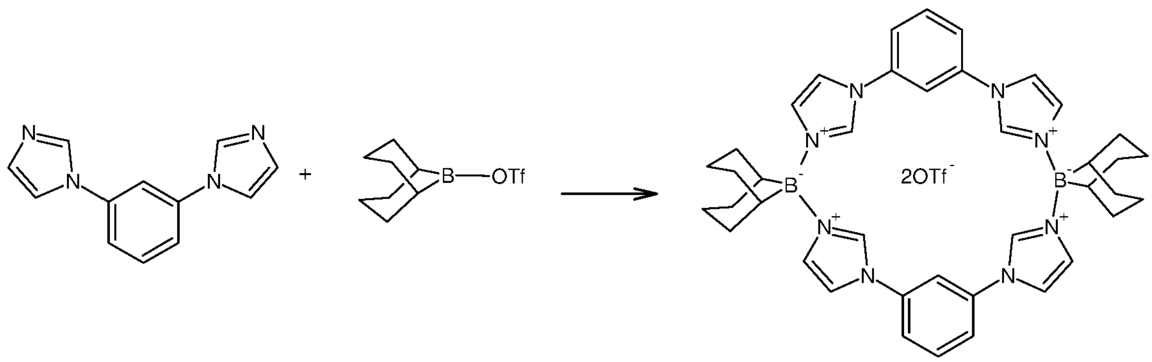

Dans un réacteur sous atmosphère inerte d'azote ou d'argon, le 1,3-di(1*H*-imidazol-1-yl)benzene (300 mg, 1.4 mmol, 2.0 eq) est dissous dans 2 mL d'acétonitrile. Une solution de 9-borabicyclo[3.3.1]nonan-9-yl trifluorométhanesulfonate 0.5 M dans de l'hexane (1.4 mmol, 2.8 mL, 2.0 eq) est alors ajoutée rapidement à la seringue à 20 °C puis le mélange réactionnel est agité pendant 16 h à 100 °C. La solution est ensuite ramenée à température ambiante et le solide formé est isolé par filtration, lavé avec 10 mL d'éther diéthylique puis placé sous vide pour éliminer les résidus de solvant. Un solide blanc (650 mg, 0.67 mmol, 95 %) est obtenu.

$^{1}$**H NMR** (400 MHz, DMSO-$d_6$) δ (ppm) 1.37 (bs, 4H), 1.64-1.93 (m, 24H), 7.78 (s, 4H), 7.86-7.99 (m, 8H), 8.20 (s, 4H), 9.21 (s, 4H)

$^{13}$C **NMR** (100 MHz, DMSO-$d_6$) δ (ppm) $19.4_{(HMQC)}$, 23.2, 30.0, 120.4 , 121.7, 123.2, 123.9, 131.5, 135.8(2C)

$^{19}$F **NMR** (376 MHz, DMSO-$d_6$) δ (ppm) -77.8 (s, $CF_3$).

$^{11}$B **NMR** (128 MHz, DMSO-$d_6$) δ (ppm) 6.9 (bs, B).

**HRMS** (ES, $[M\text{-}20Tf]^{2+}$) calculé pour $[C_{40}H_{48}B_2N_8]^{2+}$ : 330.7102; trouvé: 330.7109; (ES, [M-OTf]+) calculé pour $[C_{41}H_{48}B_2F_3N_8O_3S]^{+}$: 811.3702 ; trouvé: 811.3716

**ESI MS** (MeOH) m/z for $[M\text{-}2OTf]^{2+}$ calculé pour $[C_{40}H_{48}B_2N_8]^{2+}$ : 331.2; trouvé: 331.0; $[M\text{-}OTf]^{+}$ calculé pour $[C_{41}H_{48}B_2F_3N_8O_3S]^{+}$: 811.4; trouvé: 811.3

**FT-IR** (ATR) ν ($cm^{-1}$) 3120 (w), 3074 (w), 2921 (w), 2858 (m), 1606 (w), 1539 (w), 1491 (w), 1449 (w), 1274 (w), 1257 (s), 1222 (w), 1152 (s), 1082 (w), 1030 (w), 1006 (w), 919 (w), 873 (w), 835 (w), 828 (w), 793 (w), 737 (w), 688 (w), 632 (w).

**Composé 2 :**

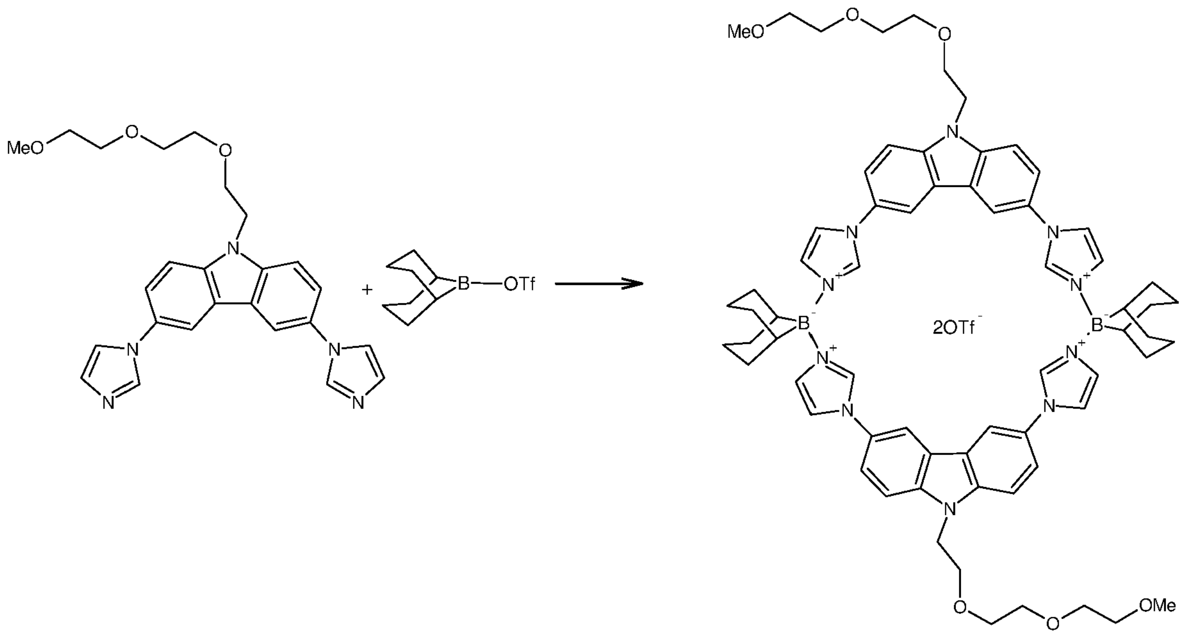

Dans un réacteur sous atmosphère d'argon, le 3,6-di(1*H*-imidazol-1-yl)-9-(2-(2-(2-méthoxyéthoxy)éthoxy)éthyl)-9*H*-carbazole (900 mg, 2.0 mmol, 2.0 eq) est dissous dans dans 3 mL d'acétonitrile. Une solution de 9-borabicyclo[3.3.1]nonan-9-yl trifluorométhanesulfonate (0.5 M dans l'hexane ; 2.0 mmol, 4 mL, 2.0 eq) est alors ajoutée en une seule fois à température ambiante. Le mélange réactionnel est agité pendant 16 h à 100°C. Après refroidissement du milieu réactionnel à température ambiante, le solvant est alors évaporé et le résidu est purifié par chromatographie sur gel de silice en utilisant un mélange de solvants (10% $MeOH/CH_2Cl_2$). Après évaporation des solvants, un solide blanc est obtenu (1.21 g, 0.85 mmol, 85 %).

$^1$H **NMR** (400 MHz, $CDCl_3$) δ (ppm) 1.31-1.91 (m, 28H), 3.29 (s, 3H), 3.38-3.47 (m, 16H), 3.80 (t, 4H, $^3J$ = *5.5* Hz), 4.50 (t, 4H, $^3J$ = *5.0* Hz), 7.48 (s, 4H), 7.61-7.66 (m, 8H), 7.75 (s, 4H), 8.96 (s, 4H), 9.17 (s, 4H).

$^{13}$C **NMR** (100 MHz, $CDCl_3$) δ (ppm) 23.4, 30.3, 43.9, 58.8, 69.5, 70.4, 70.5, 70.7, 71.7, 111.0, 113.8, 119.3, 120.0, 123.3, 123.5, 128.1, 134.9, 141.1

**HRMS** (ES, $[M-2OTF]^{2+}$) calculé pour $[C_{66}H_{82}B_2N_{10}O_6]^{2+}$: 566.3307; trouvé: 566.3306; (ES, [M-OTf]+) calculé pour $[C_67H_{82}B_2F_3N_{10}O_9S]^+$: 1281.6140; trouvé: 1281.6143

ESI MS (MeOH) m/z $[M-2OTf]^{2+}$ calculé pour $[C_{66}H_{82}B_2N_{10}O_6]^{2}$+: 566.3; trouvé: 566.5; [M-OTf]+ calculé pour $[C_{67}H_{82}B_2F_3N_{10}O_9S]^+$: 1281.6; trouvé: 1281.4

Composé 3 :

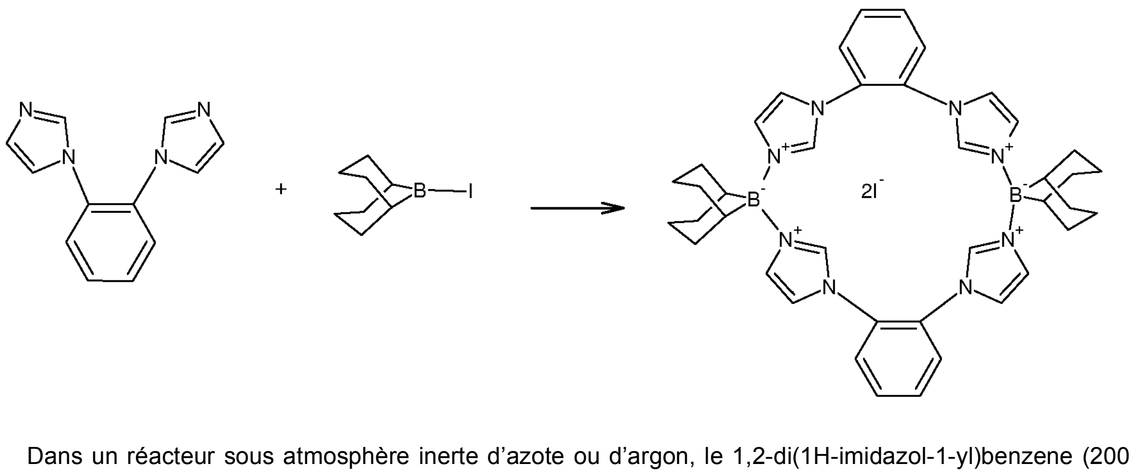

Dans un réacteur sous atmosphère inerte d'azote ou d'argon, le 1,2-di(1H-imidazol-1-yl)benzene (200 mg,

0.95 mmol, 2.0 eq) est dissous dans 2 mL d'acétonitrile. Une solution de 9-iodo-9-borabicyclo[3.3.1]nonane 1.0 M dans de l'hexane (0.95 mmol, 0.95 mL, 2.0 eq) est alors ajoutée rapidement à la seringue à 20 °C puis le mélange réactionnel est agité pendant 16 h à 100 °C. La solution est ensuite refroidie à température ambiante et le solide formé est filtré, lavé avec 10 mL d'éther diéthylique puis placé sous vide pour éliminer les résidus de solvant et donner un solide blanc (283 mg, 0.31 mmol, 63 %).

$^{1}$H **NMR** (400 MHz, DMSO-$d_6$) $\delta$ (ppm) 1.30-1.47 (m, 12H), 1.62-1.90 (m, 16H), 7.10 (s, 4H), 7.71 (s, 4H), 7.91-7.96 (m, 4H), 8.04-8.08 (m, 4H), 9.04 (s, 4H)

$^{13}$C **NMR** (100 MHz, DMSO-$d_6$) $\delta$ (ppm) 19.4, 23.3, 29.7, 30.0, 122.0, 124.6, 129.2, 132.1, 132.2, 138.5

$^{11}$B **NMR** (128 MHz, DMSO-$d_6$) $\delta$ (ppm) 6.2 (bs, B).

**HRMS** (ES, [M-21]$^{2+}$) calculé pour $[C_{40}H_{48}B_2N_8]^{2+}$ : 330.7102 ; trouvé: 330.7109; (ES, [M-I]$^{+}$) calculé pour $[C_{40}H_{48}B_2N_8I]^{+}$: 789.3227 ; trouvé: 789.3245

**ESI MS** (MeOH) m/z for [M-2I]$^{2+}$ calculé pour $[C_{40}H_{48}B_2N_8]^{2+}$ : 331.2; trouvé: 331.0; [M-I]$^{+}$ calculé pour $[C_{40}H_{48}B_2N_8I]^{+}$: 789.3; trouvé: 789.3

**FT-IR** (ATR) ν (cm$^{-1}$) 3413 (w), 3099 (w), 3092 (w), 3033 (w), 2914 (w), 2893 (w), 2887 (w), 1539 (m), 1341 (w), 1330 (w), 1138 (w), 1103 (w), 1079 (w), 929 (w), 831 (w), 769 (w), 737 (w), 688 (w), 646 (w).

**Composé 4 :**

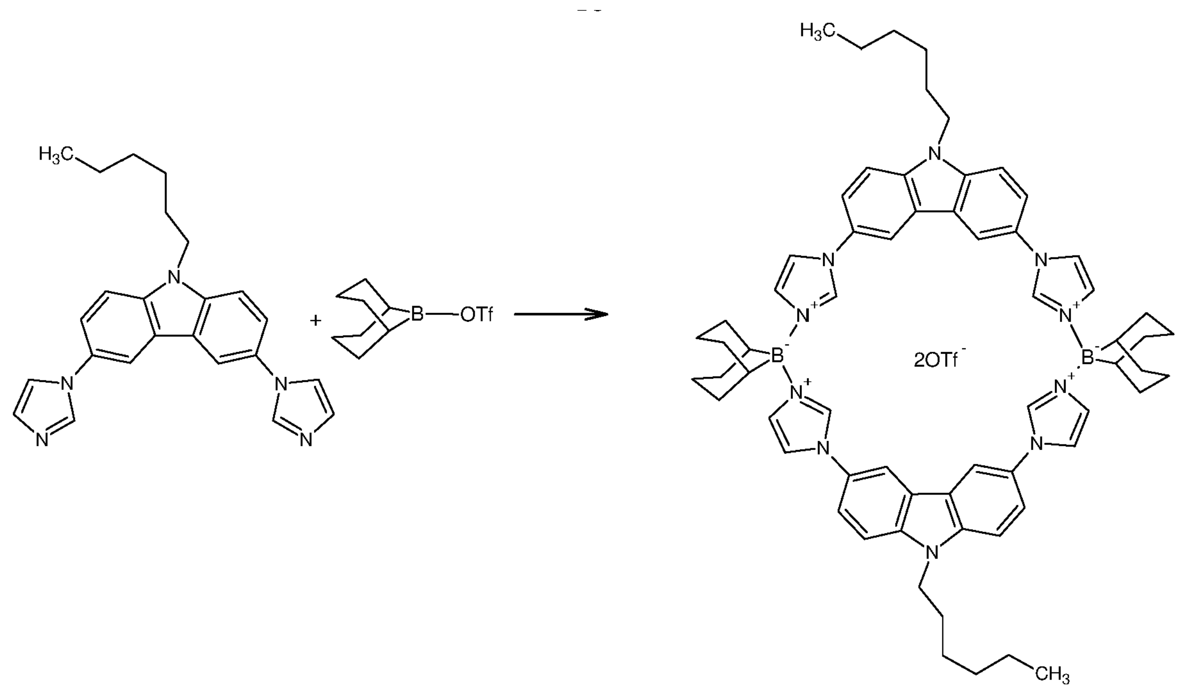

Dans un réacteur sous atmosphère d'argon, le 9-hexyl-3,6-di(1H-imidazol-1-yl)-9H-carbazole (200 mg, 0.52 mmol, 2.0 eq) est dissous dans dans 2 mL d'acétonitrile. Une solution de 9-borabicyclo[3.3.1]nonan-9-yl trifluorométhanesulfonate (0.5 M dans l'hexane ; 0.52 mmol, 1.0 mL, 2.0 eq) est alors ajoutée en une seule fois à température ambiante. Le mélange réactionnel est agité pendant 16 h à 100°C. Après refroidissement du milieu réactionnel à température ambiante, le solvant est alors évaporé et le résidu est purifié par chromatographie sur gel de silice en utilisant un mélange de solvants (10% MeOH/$CH_2Cl_2$). Après évaporation des solvants, un solide blanc est obtenu (0.34 g, 0.25 mmol, 99 %).

**$^{1}$H NMR** (400 MHz, $CDCl_3$) $\delta$ (ppm) 0.80 (t, 6H, $^{3}J=7.0$ Hz), 1.19-1.84 (m, 44H), 4.57 (t, 4H, $^{3}J$=7.3 Hz), 7.81-8.0 (m, 12H), 8.29 (s, 4H), 8.68 (s, 4H), 9.09 (s, 4H)

$^{13}$C **NMR** (100 MHz, $CDCl_3$) $\delta$ (ppm) 13.9, 14.2, 22.4, 23.4, 26.8, 28.9, 30.3, 31.4, 50.8, 110.5, 114.1, 119.5, 120.2, 123.3, 123.6, 128.0, 136.1, 140.8

$^{11}$B **NMR** (128 MHz, DMSO-$d_6$) $\delta$ (ppm) 3.0 (bs, B).

**HRMS** (ES, [M-2OTf]$^{2+}$) calculé pour $[C_{64}H_{78}B_2N_{10}]^{2+}$: 504.3293 ; trouvé: 504.3300; (ES, [M-OTf]$^{+}$) calculé pour $[C_{65}H7_8O_3N_{10}SB_2F_3]^{+}$: 1157.6111 ; trouvé: 1157.6140

**ESI MS** (MeOH) m/z for [M-2OTf]$^{2+}$calculé pour $[C_{64}H_{78}B_2N_{10}]^{2+}$: 504.3; trouvé: 504.3; [M-OTf]$^{+}$calculé pour $[C_{65}H7_8O_3N_{10}SB_2F_3]^{+}$: 1157.6; trouvé: 1157.8.

Composé 5 :

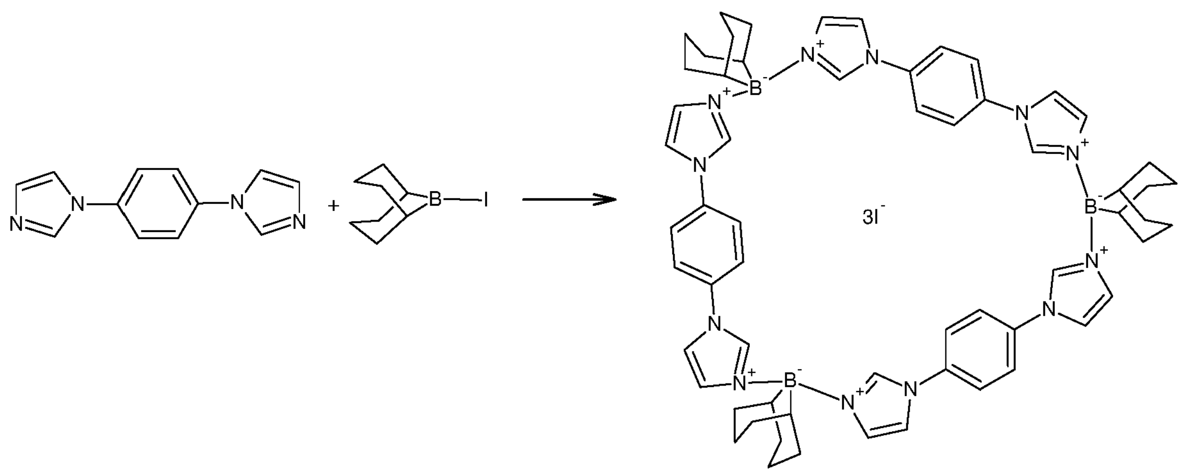

Dans un réacteur sous atmosphère inerte d'azote ou d'argon, le 1,4-di(1*H*-imidazol-1-yl)benzene (200 mg, 0.95 mmol, 3.0 eq) est dissous dans 2 mL d'acétonitrile. Une solution de iodo-9-borabicyclo[3.3.1]nonane 1.0 M dans de l'hexane (0.95 mmol, 0.95 mL, 3.0 eq) est alors ajoutée rapidement à la seringue à 20 °C puis le mélange réactionnel est agité pendant 16 h à 100 °C. La solution est ensuite refroidie à température ambiante et le solide formé est isolé par filtration, lavé avec 10 mL d'éther diéthylique puis placé sous vide pour éliminer les résidus de solvant. Un solide blanc (415 mg, 0.31 mmol, 95 %) est obtenu.

$^1$H **NMR** (400 MHz, DMSO-$d_6$) $\delta$ (ppm) 1.30-1.90 (m, 42H), 7.75-781 (m, 6H), 8.03-8.14 (m, 12H), 8.26-8.33 (m, 6H), 9.35-9.44 (m, 6H).

$^{13}$C **NMR** (100 MHz, DMSO-$d_6$) $\delta$ (ppm) 19.2, 23.2, 30.1, 122.7, 122.8, 123.1, 123.8,135.1 $^{11}$B **NMR** (128 MHz, DMSO-$d_6$) $\delta$ (ppm) 2.9 (bs, B).

**HRMS** (ES, $[M-2I]^{2+}$) calculé pour $[C_{60}H_{72}B_3N_{12}I]^{2+}$: 560.2658 ; trouvé: 560.2658.

**FT-IR** (ATR) ν ($cm^{-1}$) 3440 (w), 3426 (w), 3411 (w), 3113 (w), 3089 (w), 3071 (w), 3014 (w), 2980 (w), 2920 (w), 2889 (w), 2847 (w), 1645 (m), 1577 (w), 1533 (w), 1486 (w), 1450 (w), 1417 (w), 1377 (w), 1333 (w), 1277 (w), 1261 (w), 1255 (w), 1219 (w), 1155 (w), 1108 (w), 1080 (w), 1065 (w), 991 (w), 925 (w), 879 (w), 760 (m), 715 (w), 645 (w).

Composé 6 :

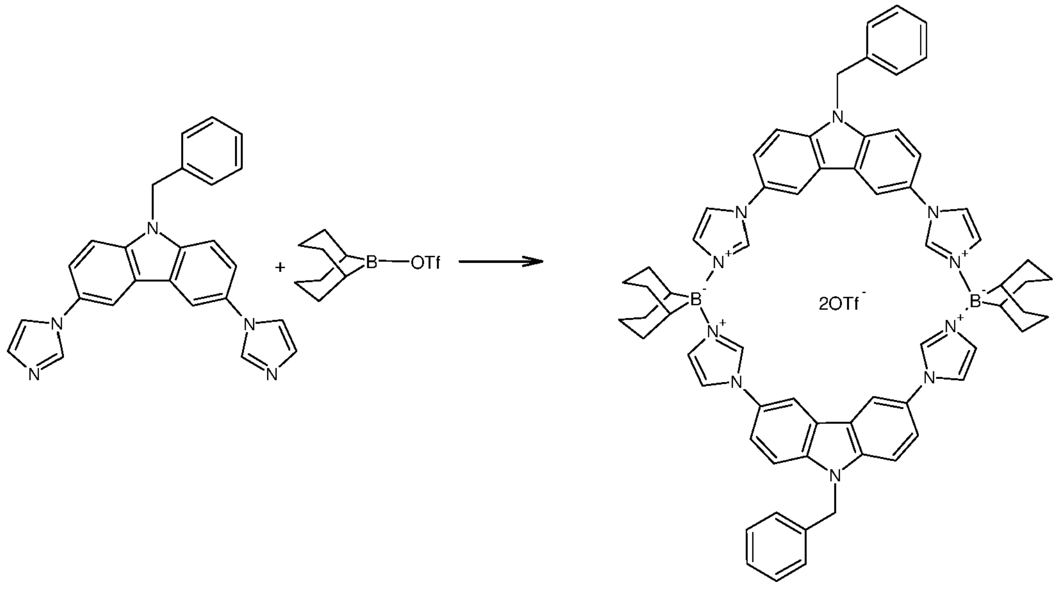

Dans un réacteur sous atmosphère d'argon, le 9-benzyl-3,6-di(1*H*-imidazol-1-yl)-9*H*-carbazole (250 mg, 0.64 mmol, 2.0 eq) est dissous dans 2 mL d'acétonitrile. Une solution de 9-borabicyclo[3.3.1]nonan-9-yl trifluorométhanesulfonate (0.5 M dans l'hexane ; 0.64 mmol, 1.3 mL, 2.0 eq) est alors ajoutée en une seule fois à température ambiante. Le mélange réactionnel est agité pendant 16 h à 100°C. Après refroidissement du milieu réactionnel à température ambiante, le solvant est alors évaporé et le résidu est purifié par chromatographie sur gel de silice en utilisant un mélange de solvants (10% MeOH/$CH_2Cl_2$). Après évaporation des solvants, un solide blanc est obtenu (0.41 g, 0.31 mmol, 97 %).
$^1$H **NMR** (400 MHz, MeOD-$DMSO_6$) δ (ppm) 1.30-2.01 (m, 28H), 5.88 (s, 4H), 7.16-7.32 (m, 10H,), 7.90-7.94 (m, 8H), 8.02 (d, 4H), 8.24 (s, 4H), 8.67 (s, 4H), 8.10 (s, 4H)
$^{13}$C **NMR** (100 MHz, MeOD-DMSO-$d_6$) δ (ppm) 19.3, 23.2, 30.1, 47.9, 111.6, 114.3, 121.6, 121.9, 122.0, 123.6, 126.7, 127.5, 128.3, 128.7, 135.0, 137.0, 140.7
$^{11}$B **NMR** (128 MHz, DMSO-$d_6$) δ (ppm) 2.2 (bs, B).
**ESI MS** (MeOH) m/z $[M\text{-}OTf]^+$calculé pour $[C_{67}H_{66}B_2F_3N_{10}O_3S]^+$: 1169.5; trouvé: 1169.6

<u>Composé 7 :</u>

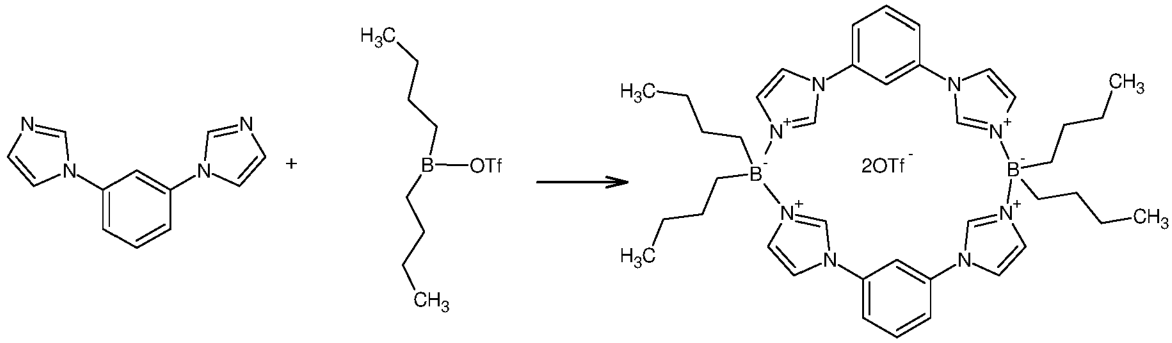

Dans un réacteur sous atmosphère inerte d'azote ou d'argon, le 1,3-di(1*H*-imidazol-1-yl)benzene (300 mg, 1.4 mmol, 2.0 eq) est dissous dans 2 mL d'acétonitrile. Une solution de dibutyl(((trifluoromethyl)sulfonyl)oxy)borane 1.0 M dans de le dichlorométhane (1.4 mmol, 1.4 mL, 2.0 eq) est alors ajoutée rapidement à la seringue à 20 °C puis le mélange réactionnel est agité pendant 16 h à 100 °C. La solution est ensuite refroidie à température ambiante et le solide formé est isolé par filtration, lavé avec 10 mL d'éther diéthylique puis placé sous vide pour éliminer les résidus de solvant. Un solide blanc (512 mg, 0.53 mmol, 76 %) est obtenu.
$^1$H **NMR** (400 MHz, DMF-$d_7$) δ (ppm) 0.88 (t, 12H, $^3J$ = 7.4 Hz), 0.96-1.22 (m, 16H), 1.30-1.42 (m, 8H), 7.86 (s, 4H),

7.95-8.14 (m, 6H), 8.35 (s, 4H), 8.49 (s, 2H), 9.33 (s, 4H)
$^{11}B$ **NMR** (128 MHz, DMSO-$d_6$) δ (ppm) 6.4 (bs, B).
**HRMS** (ES, $[M\text{-}2OTf]^{2+}$) calculé pour $[C_{40}H_{56}N_8B_2]^{2+}$: 334.7415; trouvé: 334.7428; (ES, [M-OTf]+) calculé pour $[C_{41}H_{56}N_8O_3SB_2F_3]^+$: 819.4328; trouvé: 819.4345.
**ESI MS** (MeOH) m/z for $[M\text{-}2OTf]^{2+}$ calculé pour $[C_{40}H_{56}B_2N_8]^{2+}$ : 335.3; trouvé: 335.3; $[M\text{-}OTf]^+$calculé pour $[C_{41}H_{56}B_2F_3N_8O_3S]^+$: 819.6; trouvé: 819.6

**Composé 8 :**

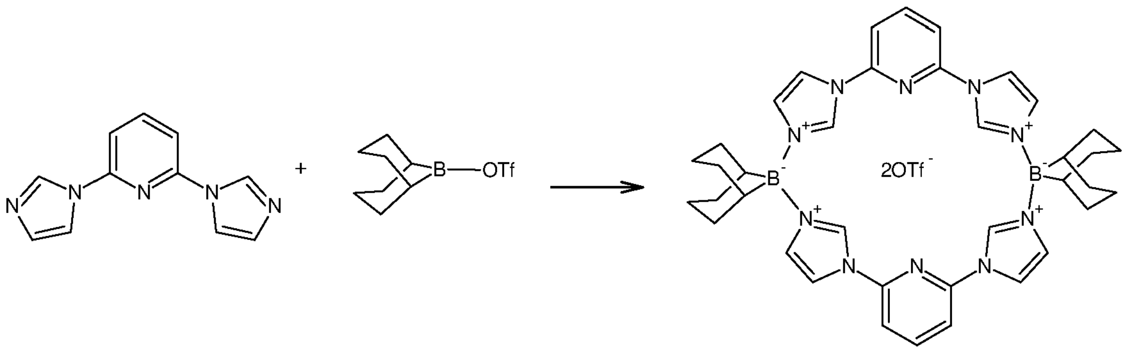

Dans un réacteur sous atmosphère inerte d'azote ou d'argon, le 2,6-di(1*H*-imidazol-1-yl)pyridine (200 mg, 0.95 mmol, 2.0 eq) est dissous dans 2 mL d'acétonitrile. Une solution de 9-borabicyclo[3.3.1]nonan-9-yl trifluorométhanesulfonate 0.5 M dans de l'hexane (0.95 mmol, 1.9 mL, 2.0 eq) est alors ajoutée rapidement à la seringue à 20 °C puis le mélange réactionnel est agité pendant 16 h à 100 °C. La solution est ensuite refroidie à température ambiante et le solide formé est isolé par filtration, lavé avec 10 mL d'éther diéthylique puis placé sous vide pour éliminer les résidus de solvant. Un solide blanc (432 mg, 0.45 mmol, 95 %) est obtenu.
$^1H$ **NMR** (400 MHz, DMSO-$d_6$) δ (ppm) 1.42 (bs, 4H), 1.63-2.03 (m, 24H), 7.82 (s, 4H), 7.07 (d, 4H, $^3J$= 8.0 Hz), 8.36 (s, 4H), 8.50 (t, 2H, $^3J$ = 8.0 Hz), 9.64 (s, 4H)
$^{13}C$ **NMR** (100 MHz, DMSO-$d_6$) δ (ppm) 18.7($_{HMQC}$), 23.3, 30.3, 115.5, 120.7, 124.4, 134.8, 144.3, 146.0
$^{19}F$ **NMR** (376 MHz, DMSO-$d_6$) δ (ppm) -77.7 (s, $CF_3$).
$^{11}B$ **NMR** (128 MHz, DMSO-$d_6$) δ (ppm) 6.9 (bs, B).
**ESI MS** (MeOH) m/z for $[M\text{-}2OTf]^{2+}$calculé pour $[C_{38}H_{46}B_2N_{10}]^{2+}$: 332.2; trouvé: 332.0
**FT-IR** (ATR) ν ($cm^{-1}$) 3494 (w), 3142 (w), 2928 (w), 2879 (w), 2849 (w), 1611 (w), 1526 (m), 1469 (w), 1344 (w), 1255 (s), 1222 (w), 1167 (w), 1079 (w), 1030 (w), 1010 (w), 923 (w), 838 (w), 813 (w), 764 (w), 736 (w), 640 (w).

**Exemple 2: Etudes de complexation des anions avec le composé 1 par spectroscopie RMN 1H** :

Les constantes d'association Ka ont été déterminées par des titrages par spectroscopie RMN $^1H$ à 298 K dans le DMSO. Des aliquotes d'une solution concentrée aux anions correspondants ont été ajoutés successivement dans le tube RMN contenant une solution diluée du composé 1 ($10^{-2}$ M) dans le DMSO. Les constantes d'association ont été déterminées en utilisant le logiciel WineqNMR2 en suivant le déplacement chimique d'un ou plusieurs signaux relatifs au récepteur au cours du titrage.
Le tableau ci-dessous montre les constantes d'association obtenues.

| Anion[b] | Ka ($M^{-1}$) |
|---|---|
| $F^-$ | 3966 |
| $Cl^-$ | 4062 |
| $Br^-$ | 2035 |
| $I^-$ | 36 |
| $MeCOO^-$ | 3428 |

(suite)

| Anion[b] | Ka ($M^{-1}$) |
|---|---|
| $HSO_4^-$ | 28 |

Ces résultats montrent que les composés de l'invention présentent des affinités avec les anions et que des interactions se créent entre les anions et les composés de l'invention. Ces résultats montrent également que les composés de l'invention pour lesquels A représente un groupe phényle ont une affinité plus importante avec les fluorures, bromures, acétates qu'avec les iodures.

**Exemple 3 : Etudes de complexation de l'anion iodure avec le composé 2 par titrages en fluorimétrie**

*Exemple de mesure (avec les ions iodures)*

Des constantes d'association ont également été déterminées par titrages en fluorimétrie à 298 K dans les solvants indiqués (DCM (dichlorométhane) ou mélange acétonitrile/eau 1 :1). Des aliquotes d'une solution en anions à doser ont été ajoutés successivement dans une cellule en quartz d'un centimètre de trajet optique contenant une solution diluée du composé 2 ($10^{-7}$ M). Les constantes d'association ont été calculées de la manière suivante :

*Formation d'un complexe non fluorescent :*

Le modèle suivant est utilisé pour analyser les données avec une stoechiométrie anion/macrocycle : 1/1.
Composé 2 + anion → composé 2-anion
fluorescent non fluorescent
De telle sorte que l'intensité de fluorescence est proportionnelle à la concentration en composé non complexé. La fraction du composé complexé s'exprime de la façon suivante :

$$x = \frac{I_0 - I}{I_0} = \frac{(K_d + C_0 + A_0) + \sqrt{(K_d + C_0 + A_0)^2 - 4C_0A_0}}{2C_0}$$

$I_0$: intensité de fluorescence initiale sans ligand (excitation 284 nm; émission à 390 nm)
$K_d$: la constante de dissociation du complexe
$C_0$: la concentration initiale en composé 2 non complexé (ici $10^{-7}$ M)
$A_0$: la concentration ajoutée en anion

De cette manière on trace $x=f(A_0)$ et on détermine $K_d$.

*Résultats:*

Excitation 284nm, émission 387nm
Le tableau ci-dessous montre les constantes d'association obtenues.
Constantes d'association obtenues (ACN=acétonitrile, DCM=dichlorométhane)

| Anion (solvant) | $K_d$ | $K_a$ |
|---|---|---|
| $I^-$(DCM) | 4,20 E-08 | 2,38 E+07 |
| $I^-$ (ACN/$H_2O$ 1/1) | 5,20 E-07 | 1,92 E+06 |
| $CH_3COO^-$ (DCM) | 4,29 E-07 | 2,33 E+06 |

Ces résultats montrent une affinité forte entre les composés de l'invention pour lesquels A représente un groupe carbazole et les iodures.

**Exemple** 4 : **Etudes de réversibilité de la complexation des anions par spectroscopie RMN 1H**

Exemple 4.1. Compétition entre des composés 1·21 et 1·2Br

Le composé 1·2I correspond aux composés 1 de l'invention dans lequel OTf a été remplacé par de l'iode.

Le composé 1·2Br correspond aux composés 1 de l'invention dans lequel OTf a été remplacé par du brome.

La compétition de la complexation des anions iodure et bromure a été déterminée par des titrages par spectroscopie RMN $^1H$ à 298 K dans le $d_6$-DMSO. 0 à 5 équivalents d'une solution concentrée du composé 1·2I dans le $d_6$-DMSO ont été ajoutés successivement dans le tube RMN contenant une solution diluée du composé 1·2Br (5,0.$10^{-3}$ M) dans le DMSO deutéré. Les déplacements chimiques du proton en position 2 des groupes imidazolium du composé 1·2Br et l'analyse des déplacements chimiques du proton en position 2 du 1,3-bisimidazolium-phényle du composé 1·2Br après addition de 0 à 5 équivalents du composé 1·2I ont été répertoriés respectivement dans les figures 1 et 2. Ces figures montrent clairement la réversibilité de la complexation des anions iodure et bromure car un déplacement chimique moyen est obtenu pour chaque proton.

Exemple 4.2. Etudes de réversibilité de la complexation des anions bromure par spectroscopie RMN 1H

La réversibilité de la complexation des anions bromure a été déterminée par des titrages par spectroscopie RMN 1H à 298 K dans un mélange de solvants d6-DMSO/d6-acétone (4:1). 0 à 100 équivalents d'une solution concentrée d'iodure de potassium dans un mélange de solvants d6-DMSO/d6-acétone (4:1) ont été ajoutés successivement dans un tube RMN contenant une solution diluée du composé 1·2Br (2,5.$10^{-3}$ M) dans un mélange de solvants d6-DMSO/d6-acétone (4:1). Les déplacements chimiques du proton en position 2 des groupes imidazolium du composé 1·2Br et l'analyse des déplacements chimiques du proton en position 2 du 1,3-bisimidazolium-phényle du composé 1·2Br après addition de 0 à 100 équivalents d'iodure de potassium ont été répertoriés respectivement dans les figures 3 et 4. Ces figures montrent clairement la réversibilité de la complexation des anions bromure car un déplacement chimique moyen est obtenu pour chaque proton.

Exemple 4.3. Etudes de réversibilité de la complexation des anions chlorure par spectroscopie RMN 1H

Le composé 1·2Cl correspond aux composés 1 de l'invention dans lequel OTf a été remplacé par de l'iode.

La réversibilité de la complexation des anions chlorure a été aussi déterminée par des titrages par spectroscopie RMN 1H à 298 K dans un mélange de solvants d6-DMSO/d6-acétone (4:1). 0 à 100 équivalents d'une solution concentrée d'iodure de potassium dans un mélange de solvants d6-DMSO/d6-acétone (4:1) ont été ajoutés successivement dans le tube RMN contenant une solution diluée du composé 1·2Cl (2,5.10-3 M) dans un mélange de solvants d6-DMSO/d6-acétone (4:1). Les déplacements chimiques du proton en position 2 des groupes imidazolium du composé 1·2Cl et l'analyse des déplacements chimiques du proton en position 2 du 1,3-bisimidazolium-phényle du composé 1·2Cl après addition de 0 à 100 équivalents d'iodure de potassium ont été répertoriés respectivement dans les figures 5 et 6. Ces figures montrent clairement la réversibilité de la complexation des anions chlorure car un déplacement chimique moyen est obtenu pour chaque proton.

Exemple 4.4. Etudes de réversibilité de la complexation des anions iodure par spectroscopie RMN 1H

1,0 équivalent d'une solution de chlorure de lithium dans un mélange de solvants $d_6$-DMSO/$d_6$-acétone (4:1) a été ajouté dans le tube RMN contenant une solution du composé 1·2I (2,5.$10^{-3}$ M) dans un mélange de solvants $d_6$-DMSO/$d_6$-acétone (4:1). Les déplacements chimiques des protons du composé 1·2I avant et après ajout de chlorure de lithium sont représentés en figure 7 (1er graphique déplacement chimique avant ajout, 2ème graphique déplacement chimique après ajout). Cette figure montre clairement la réversibilité de la complexation des anions iodure car un déplacement chimique moyen est obtenu pour chaque proton.

## Revendications

1. Composés de formule (I)

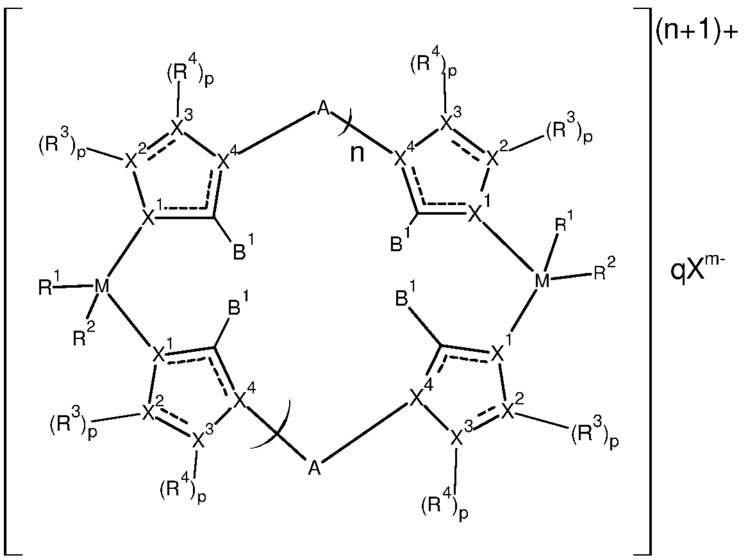

(I)

dans laquelle :

 représente une liaison simple ou une liaison double ;
m représente 1 ou 2 ;
n représente 1, 2 ou 3 ;
p représente 1 ou 2 ;
$X^1$, chacun identique ou différent, représente N;
$X^2$, $X^3$, $X^4$, chacun identique ou différent, représentent C ou N ;
M, chacun identique ou différent, de préférence identique, représente un métal choisi parmi le bore, et le gallium ;
$R^1$ et $R^2$, chacun identique ou différent, représentent un groupe alkyle, un groupe cycloalkyle, un groupe aryle, un atome d'halogène, ou $R^1$ et $R^2$ forment avec M un monocycle ou un polycycle ou l'un de $R^1$ ou $R^2$ peut être absent ;
$X^{m-}$ représente un groupe trifluorométhylsulfonate ($CF_3SO_3$ ), un groupe $BF_4^-$, un groupe $PF_6^-$, un groupe $SbF_5^-$ , un halogénure, un groupe acétate ($CH_3COO^-$), un groupe oxalate ($C2O4^{2-}$), un groupe sulfate ($SO4^{2-}$), un groupe phosphate ($HPO4^{2-}$), un groupe tartrate ($C_4H_5O_6^-$);
q représente (n+1) ou (n+1)/2 selon que X est respectivement un monoanion (m=1) ou un dianion (m=2) ;
A, chacun identique ou différent, représente un groupe aryle, un groupe hétéroaryle, monocyclique ou polycyclique, optionnellement substitué par un ou plusieurs groupes choisis parmi :

- halogène (F, Cl, Br, I);
- alkyle en $C_1$ à $C_{15}$, de préférence en $C_1$ à $C_{10}$ ;
- $(C_1-C_5)$alkyle-aryle, de préférence $(C_1-C_5)$alkyle-phényle ;
- $(C_1-C_5)$alkyle-hétéroaryle ;
- $(C_1-C_5)$alkyle-cycloalkyle ;
- $(C_1-C_5)$alkyle-hétérocycle ;
- $((C_1-C_5)alkyle)_r$-O-$((C_1-C_5)$alkyle);
- $B(R^5)_2$;
- $N(R^6)_2$;
- $OR^7$;
- $O(CO)R^7$;
- $N(R^6)_3^+,T^-$;
- $NO_2$;
- $NHCOR^7$;
- $NHCSR^8$;
- $N{=}CHN(R^7)_2$;
- CN;
- $COOR^7$;

- $COR^7$;
- $CON(R^7)_2$;
- $COO^-Y^+$;
- $COSR^7$;
- $P(=Z)(R^{10})_2$;

r représente un entier entre 1 et 5, de préférence 1 à 3 ;
$R^5$, identique ou différent, représente H, OH, $R^6$ ;
$R^6$, identique ou différent, représente H, un groupe Oalkyle, un groupe OH, un groupe alkyle, un groupe aryle, un groupe hétéroaryle ;
$R^7$, identique ou différent, représente H, un groupe alkyle, un groupe aryle, un groupe hétéroaryle ;
$R^8$, identique ou différent, représente un groupe alkyle, un groupe aryle, un groupe hétéroaryle, $OR^7$, $NR^7$ ;
$R^9$, identique ou différent, représente H, un groupe alkyle, un groupe aryle, un groupe hétéroaryle, un groupe $COR^7$, un groupe $R^7C$=NH ;
$R^{10}$, identique ou différent, représente un groupe $R^6$, un groupe O-aryle, un groupe O-hétéroaryle ;
$T^-$, identique ou différent, représente un halogénure, un sulfonate, un phosphinate, un phosphate, un anion issu du phosphore, par exemple $PF_6^-$; un anion issu de l'antimoine, par exemple $SbF_5^-$ ; un anion issu du bore, par exemple $BF_4^-$ ;
Y, identique ou différent, représente un métal alcalin, un métal alcalino-terreux, un métal de transition, un lanthanide ou un ammonium ;
Z, identique ou différent, représente O, S;
$R^3$ et $R^4$, chacun identique ou différent, représentent

- H;
- Halogène, par exemple F, Cl Br, I;
- $B(R^5)_2$;
- $N(R^6)2$;
- $OR^7$;
- $O(CO)R^7$;
- $N(R^6)_3^+,T^-$;
- $NO_2$;
- $NHCOR^7$;
- $NHCSR^8$;
- $N=CHN(R^7)2$;
- CN;
- $COOR^7$;
- $COR^7$;
- $CON(R^7)_2$;
- $COO^-Y^+$;
- $P(=Z)(R^{10})_2$;

ou $R^3$ et $R^4$ forment avec $X^2$ et $X^3$ un groupe cycloalkyle, un groupe hétérocycle, un groupe aryle ou un groupe hétéroaryle ;
$B^1$, chacun identique ou différent, représente H, halogène, $NHR^{11}$, OH ;
$R^{11}$, identique ou différent, représente $R^7$, $COR^7$, $COOR^7$, $Si(R^6)_3$.

**2.** Composé selon la revendication 1, dans lequel n représente 1 ou 2.

**3.** Composé selon l'une quelconque des revendications 1 ou 2, dans lequel $R^1$ et $R^2$ représentent un groupe alkyle, notamment en $C_1$ à $C_{10}$, par exemple en $C_1$ à $C_5$, ou forment avec M un monocycle par exemple de 5 à 6 membres ou un polycycle par exemple de 9 à 15 membres, de préférence un polycycle.

**4.** Composé selon l'une quelconque des revendications 1 ou 2, dans lequel $R^1$ et $R^2$ représentent un groupe alkyle, notamment en $C_1$ à $C_{10}$, par exemple en $C_1$ à $C_5$, ou $R^1$ et $R^2$ forment avec M un polycycle à 9 membres, de préférence bicyclo[3.3.1]nonan-9-yl formant ainsi le groupe

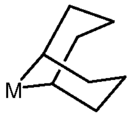 , (

de préférence

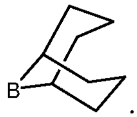 .

**5.** Composé selon l'une quelconque des revendications 1 à 4, dans lequel A représente un groupe aryle, notamment en $C_6$ à $C_{12}$ ou un groupe hétéroaryle notamment comprenant de 5 à 13 membres, mono ou polycyclique, éventuellement substitué notamment par :

- un groupe alkyle en $C_1$ à $C_{15}$, de préférence en $C_1$ à $C_{10}$,
- ($C_1$-$C_5$)alkyle-aryle, de préférence ($C_1$-$C_5$)alkyle-phényle ;
- ($C_1$-$C_5$)alkyle-hétéroaryle ;
- ($C_1$-$C_5$)alkyle-cycloalkyle ;
- ($C_1$-$C_5$)alkyle-hétérocycle ou
- un groupe -(($C_1$-$C_5$)alkyle)$_r$-O-(($C_1$-$C_5$)alkyle), r représentant un entier entre 1 et 5, de préférence 1 à 3 .

**6.** Composé selon l'une quelconque des revendications 1 à 4, dans lequel A représente un groupe aryle, notamment en $C_6$ à $C_{12}$ ou un groupe hétéroaryle notamment comprenant de 5 à 13 membres, mono ou polycyclique, éventuellement substitué notamment par un groupe alkyle en $C_1$ à $C_{15}$, de préférence en $C_1$ à $C_{10}$, ($C_1$-$C_5$)alkyle-aryle, de préférence ($C_1$-$C_5$)alkyle-phényle ; ou un groupe -(($C_1$-$C_5$)alkyle)$_r$-O-(($C_1$-$C_5$)alkyle), r représentant un entier entre 1 et 5, de préférence 1 à 3 .

**7.** Composé selon l'une quelconque des revendications 1 à 4, dans lequel A représente un groupe phényle, un groupe pyridine ou un groupe carbazole éventuellement substitué notamment par un groupe alkyle en $C_1$ à $C_{15}$, de préférence en $C_1$ à $C_{10}$, ($C_1$-$C_5$)alkyle-aryle, de préférence ($C_1$-$C_5$)alkyle-phényle ; ou un groupe -(($C_1$-$C_5$)alkyle)$_r$-O-(($C_1$-$C_5$)alkyle), r représentant un entier entre 1 et 5, de préférence 1 à 3 .

**8.** Composé selon l'une quelconque des revendications 1 à 7, dans lequel $R^3$ et $R^4$ représentent H.

**9.** Composé selon l'une quelconque des revendications 1 à 8, dans lequel $X^1$, $X^4$ représentent N.

**10.** Composé selon l'une quelconque des revendications 1 à 9, dans lequel l'un de $X^2$, $X^3$, représente N et l'autre représente C ou $X^2$ et $X^3$ représentent C.

**11.** Composé selon l'une quelconque des revendications 1 à 10, dans lequel $B^1$ représente H.

**12.** Composé selon la revendication 1 de formule (Ib)

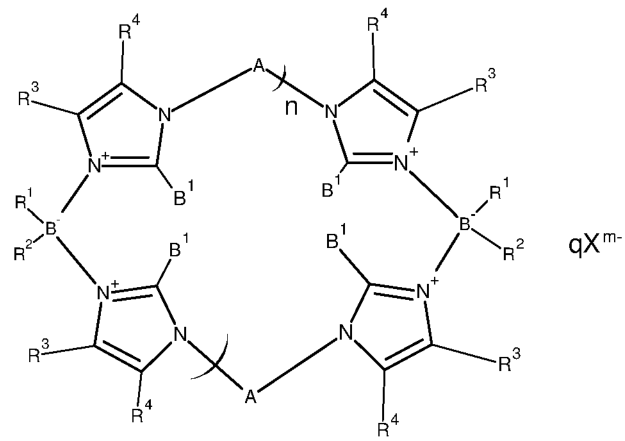

(Ib)

dans laquelle
$B^1$, A, q, m, X, $R^1$, $R^2$, $R^3$ et $R^4$ ont les définitions des revendications 1 à 11, B représente le bore.

**13.** Composé selon l'une quelconque des revendications 1 à 12, dans lequel A représente :

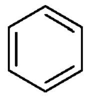
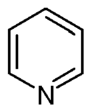
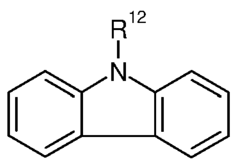
,

de préférence

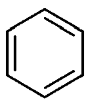
ou
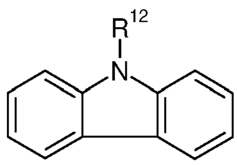
,

$R^{12}$ représente un groupe alkyle en $C_1$ à $C_{15}$, de préférence en $C_1$ à $C_{10}$, un groupe ($C_1$-$C_5$)alkyle-aryle, de préférence ($C_1$-$C_5$)alkyle-phényle ou -(($C_1$-$C_5$)alkyle)$_r$-O-(($C_1$-$C_5$)alkyle), r représentant un entier entre 1 et 5, de préférence 1 à 3.

**14.** Utilisation des composés selon l'une quelconque des revendications 1 à 13 pour le piégeage d'anions.

**15.** Utilisation des composés selon l'une quelconque des revendications 1 à 13 pour la détection d'anions.

**16.** Utilisation des composés selon la revendication 14 pour le traitement de milieu, notamment pour la dépollution de milieu liquide.

**17.** Utilisation des composés selon la revendication 15 pour l'analyse, qualitative et quantitative de milieu, notamment milieu liquide.

## Patentansprüche

**1.** Verbindungen der Formel (I)

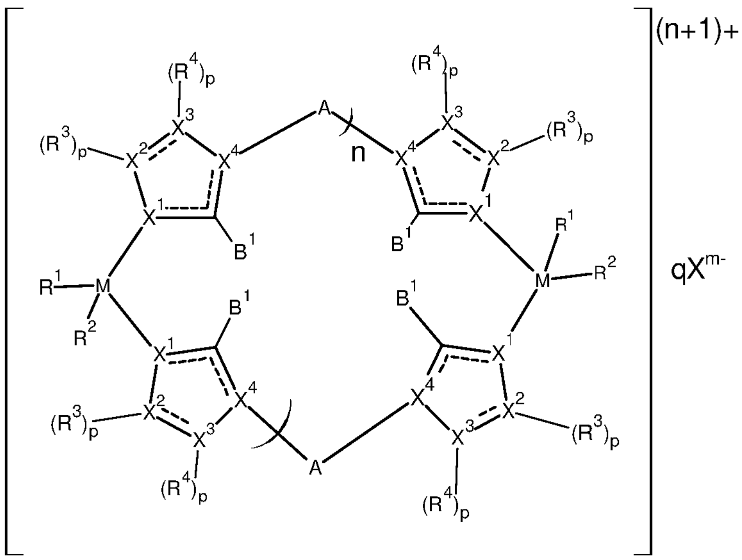

(I)

in der:

$\overline{\text{- - - - - - -}}$ eine Einfach- oder Doppelbindung darstellt;

m 1 ou 2 darstellt;

n 1, 2 oder 3 darstellt;

p 1 oder 2 darstellt;

$X^1$, jeweils gleich oder verschieden, N darstellt;

$X^2$, $X^3$, $X^4$, jeweils gleich oder verschieden, C oder N darstellen;

M, jeweils gleich oder verschieden, vorzugsweise gleich, ein Metall, ausgewählt aus Bor und Gallium, darstellt;

$R^1$ und $R^2$, jeweils gleich oder verschieden, eine Alkylgruppe, eine Cycloalkylgruppe, eine Arylgruppe, ein Halogenatom darstellen, oder $R^1$ und $R^2$ zusammen mit M einen monocyclischen oder polycyclischen Ring bilden, oder eines von $R^1$ oder $R^2$fehlen kann;

$X^{m-}$ eine Trifluormethylsulfonatgruppe (CF3S03-), eine BF4-Gruppe, eine PF6- Gruppe, eine SbF5- Gruppe, ein Halogenid, eine Acetatgruppe (CH3COO-), eine Oxalatgruppe (C2042-), eine Sulfatgruppe (S042-), eine Phosphatgruppe (HP042-), eine Tartratgruppe (C4H506-) dar;

q (n+1) oder (n+1)/2 darstellt, je nachdem, ob X jeweils ein Monoanion (m=1) oder ein Dianion (m=2) ist;

A, jeweils gleich oder verschieden, eine Arylgruppe, eine monocyclische oder polycyclische Heteroarylgruppe darstellt, gegebenenfalls substituiert durch eine oder mehrere Gruppen, ausgewählt aus:

- Halogen (F, Cl, Br, I);
- $C_1$ bis $C_{15}$ Alkyl, vorzugsweise $C_1$ bis $C_{10}$;
- ($C_1$-$C_5$) Alkyl-Aryl, vorzugsweise ($C_1$-$C_5$) Alkyl-Phenyl;
- ($C_1$-$C_5$) Alkyl-Heteroaryl;
- ($C_1$-$C_5$) Alkyl-Cycloalkyl;
- ($C_1$-$C_5$) Alkyl-Heterocyclus;
- (($C_1$-$C_5$) Alkyl)$_r$-O-(($C_1$-$C_5$) Alkyl);
- $B(R^5)_2$;
- $N(R^6)_2$;
- $OR^7$;
- $O(CO)R^7$
- $N(R^6)_3{}^+,T^-$;
- $NO_2$;
- $NHCOR^7$;
- $NHCSR^8$;
- $N{=}CHN(R^7)_2$;
- CN;
- $COOR^7$;

- $COR^7$;
- $CON(R^7)_2$;
- $COO^-Y^+$;
- $COSR^7$;
- $P(=Z)(R^{10})_2$;

r eine ganze Zahl zwischen 1 und 5, vorzugsweise 1 bis 3, darstellt;
$R^5$, jeweils gleich oder verschieden, H, OH, $R^6$darstellt;
$R^6$, gleich oder verschieden, H, eine Oalkylgruppe, eine OH-Gruppe, eine Alkylgruppe, eine Arylgruppe oder eine Heteroarylgruppe darstellt;
$R^7$, gleich oder verschieden, H, eine Alkylgruppe, eine Arylgruppe, eine Heteroarylgruppe darstellt;
$R^8$, gleich oder verschieden, eine Alkylgruppe, eine Arylgruppe, eine Heteroarylgruppe, eine COR7 Gruppe, eine R7C=NH Gruppe darstellt;
$R^9$, gleich oder verschieden, H, eine Alkylgruppe, eine Arylgruppe, eine Heteroarylgruppe, eine COR7 Gruppe, eine R7C=NH Gruppe darstellt;
$R^{10}$, gleich oder verschieden, eine R6 Gruppe, eine O-Arylgruppe, eine O-Heteroarylgruppe, darstellt;
T-, gleich oder verschieden, ein Halogenid, ein Sulfonat, ein Phosphinat, ein Phosphat, ein Anion des Phosphors, beispielsweise PF6; ein Anion des Antimons, beispielsweise SbF5-; ein Anion des Bors, beispielsweise BF4- darstellt;
Y, gleich oder verschieden, ein Alkalimetall, ein Erdalkalimetall, ein Übergangsmetall, ein Lanthanid oder ein Ammonium darstellt;
Z, gleich oder verschieden, O, S darstellt;
$R^3$ und $R^4$, jeweils gleich oder verschieden, darstellen

- H;
- Halogene, par exemple F, Cl, Br, I ;
- $B(R^5)_2$
- $N(R^6)_2$
- $OR^7$;
- $O(CO)R^7$
- $N(R^6)_3{}^+,T^-$;
- $NO_2$ ;
- $NHCOR^7$;
- $NHCSR^8$;
- $N{=}CHN(R^7)_2$;
- CN;
- $COOR^7$;
- $COR^7$ ;
- $CON(R^7)_2$ ;
- $COO^-Y^+$;
- $P(=Z)(R^{10})_2$;

oder $R^3$ und $R^4$ zusammen mit $X^2$ und $X^3$ eine Cycloalkylgruppe, eine Heterocyclusgruppe, eine Arylgruppe oder eine Heteroarylgruppe bilden;
$B^1$, gleich oder verschieden, H, Halogen, $NHR^{11}$, OH darstellt;
$R^{11}$, gleich oder verschieden, $R^7$, $COR^7$, $COOR^7$, $Si(R^6)_3$ darstellt.

**2.** Verbindung nach Anspruch 1, bei der n 1 oder 2 darstellt.

**3.** Verbindung nach einem beliebigen der Ansprüche 1 oder 2, bei der $R^1$ und $R^2$ eine Alkylgruppe, insbesondere $C_1$ bis $C_{10}$, beispielsweise $C_1$ bis $C_5$Alkylgruppe, darstellen oder mit M einen Monozyklus, beispielsweise 5- bis 6-gliedrigen Monozyklus oder einen Polyzyklus, beispielsweise 9- bis 15-gliedrigen Polyzyklus, vorzugsweise einen Polyzyklus, bilden.

**4.** Verbindung nach einem beliebigen der Ansprüche 1 oder 2, bei der $R^1$ und $R^2$ eine Alkylgruppe, insbesondere $C_1$ bis $C_{10}$, beispielsweise $C_1$ bis $C_5$ Alkylgruppe, darstellen oder $R^1$ und $R^2$ mit M einen 9-gliedrigen Polyzyklus, vorzugsweise Bicyclo[3.3.1]nonan-9-yl, bilden, wodurch die Gruppe

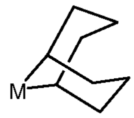

,

vorzugsweise

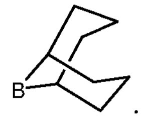

.

gebildet wird.

5. Verbindung nach einem beliebigen der Ansprüche 1 bis 4, bei der A eine Arylgruppe, insbesondere mit $C_6$ bis $C_{12}$ Arylgruppe, oder eine Heteroarylgruppe, insbesondere mit 5 bis 13 Gliedern, mono- oder polycyclisch, gegebenenfalls substituiert insbesondere durch:

- eine $C_1$ bis $C_{15}$ Alkylgruppe, vorzugsweise $C_1$ bis $C_{10}$ Alkylgruppe,
- $(C_1$-$C_5)$ Alkyl-Aryl, vorzugsweise $(C_1$-$C_5)$ Alkyl-Phenyl;
- $(C_1$-$C_5)$ Alkyl-Heteroaryl;
- $(C_1$-$C_5)$ Alkyl-Cycloalkyl;
- $(C_1$-$C_5)$ Alkyl-Heterocyclus oder
- eine $-((C_1$-$C_5)Alkyl)_rO$-$((C_1$-$C_5)Alkyl)$ Gruppe, wobei r eine ganze Zahl zwischen 1 und 5, vorzugsweise 1 bis 3, darstellt.

6. Verbindung nach einem beliebigen der Ansprüche 1 bis 4, bei der A eine Arylgruppe, insbesondere eine $C_6$ bis $C_{12}$ Arylgruppe, oder eine Heteroarylgruppe, insbesondere mit 5 bis 13 Gliedern, mono- oder polycyclisch, gegebenenfalls substituiert insbesondere durch eine $C_1$ bis $C_{15}$, vorzugsweise $C_1$ bis $C_{10}$ Alkylgruppe, ein $(C_1$-$C_5)$ Alkylaryl, vorzugsweise ein $(C_1$-$C_5)$ Alkylphenyl; oder eine $-((C_1$-$C_5)$-$Alkyl)_rO$-$((C_1$-$C_5)$-Alkyl)gruppe darstellt, wobei r eine ganze Zahl zwischen 1 und 5, vorzugsweise 1 bis 3, darstellt.

7. Verbindung nach einem beliebigen der Ansprüche 1 bis 4, bei der A eine Phenylgruppe, eine Pyridingruppe oder eine Carbazolgruppe, gegebenenfalls substituiert insbesondere durch eine $C_1$ bis $C_{15}$, vorzugsweise $C_1$ bis $C_{10}$ Alkylgruppe, ein $(C_1$-$C_5)$ Alkylaryl, vorzugsweise ein $(C_1$-$C_5)$ Alkylphenyl; oder eine $-((C_1$-$C_5)$-$Alkyl)_rO$-$((C_1$-$C_5)$-Alkyl)gruppe darstellt, wobei r eine ganze Zahl zwischen 1 und 5, vorzugsweise 1 bis 3, darstellt.

8. Verbindung nach einem beliebigen der Ansprüche 1 bis 7, bei der $R^3$ und $R^4$ H darstellen.

9. Verbindung nach einem beliebigen der Ansprüche 1 bis 8, bei der $X^1$, $X^4$ N darstellen.

10. Verbindung nach einem beliebigen der Ansprüche 1 bis 9, bei der eines von $X^2$, $X^3$ N darstellen und das andere C darstellt oder $X^2$ und $X^3$ C darstellen.

11. Verbindung nach einem beliebigen der Ansprüche 1 bis 10, bei der $B^1$ H darstellt.

12. Verbindung nach Anspruch 1 der Formel (Ib)

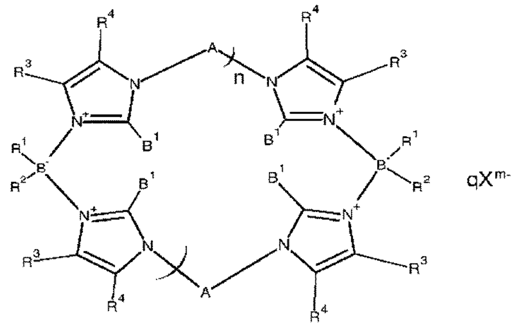

(Ib)

in der
$B^1$, A, q, m, X, $R^1$, $R^2$, $R^3$ und $R^4$ die Definitionen wie in den Ansprüchen 1 bis 11 aufweisen, wobei B Bor darstellt.

**13.** Verbindung nach einem beliebigen der Ansprüche 1 bis 12, bei der A darstellt:

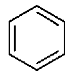 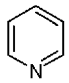 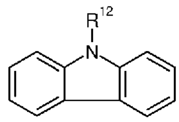 ,

vorzugsweise

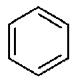

oder

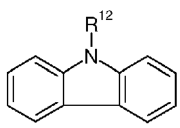 ,

$R^{12}$ eine $C_1$ bis $C_{15}$, vorzugsweise $C_1$ bis $C_{10}$ Alkylgruppe, eine $(C_1\text{-}C_5)$Alkylarylgruppe, vorzugsweise eine $(C_1\text{-}C_5)$Alkylphenylgruppe oder eine $-((C_1\text{-}C_5)\text{Alkyl})_r\text{O-}((C_1\text{-}C_5)\text{Alkyl})$gruppe darstellt, wobei r eine ganze Zahl von 1 bis 5, vorzugsweise 1 bis 3 darstellt.

**14.** Verwendung der Verbindungen nach einem beliebigen der Ansprüche 1 bis 13 zum Einfangen von Anionen.

**15.** Verwendung der Verbindungen nach einem beliebigen der Ansprüche 1 bis 13 zum Detektieren von Anionen.

**16.** Verwendung der Verbindungen nach Anspruch 14 zur Behandlung von Medien, insbesondere zur Entgiftung von flüssigen Medien.

**17.** Verwendung der Verbindungen nach Anspruch 15 für die qualitative und quantitative Analyse von Medien, insbesondere flüssigen Medien.

## Claims

**1.** Compounds of formula (I)

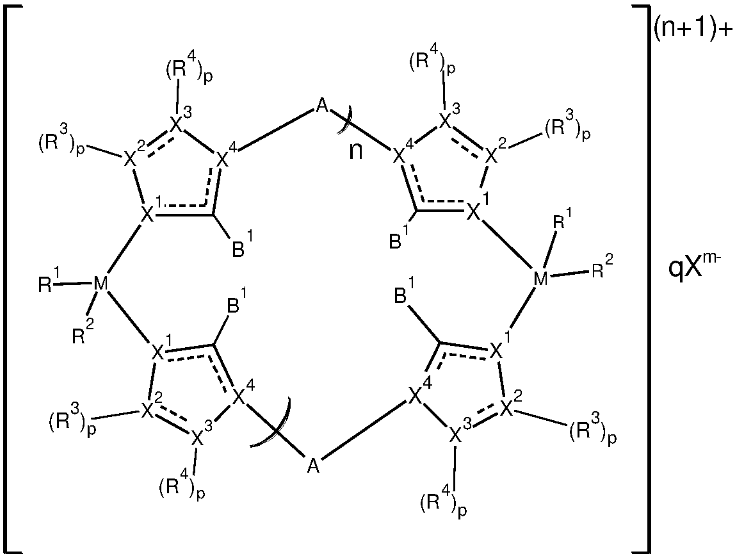

(I)

wherein:

represent a simple bond or a double bond;
m represents 1 or 2;
n represents 1, 2 or 3;
p represents 1 or 2;
$X^1$, each either identical or different, represents N;
$X^2$, $X^3$, $X^4$, each either identical or different, represent C or N;
M, each either identical or different, preferably identical, represent a metal selected from boron and gallium;
$R^1$ and $R^2$, each either identical or different, represent an alkyl group, a cycloalkyl group, an aryl group, un halogen atom, or $R^1$ and $R^2$ form with M a monocycle or a polycycle or one of $R^1$ or $R^2$ may be absent;
$X^{m-}$ represents a trifluoromethylsulfonate group ($CF_3SO_3^-$), a group $BF_4^-$, a group $PF_6^-$, a group $SbF_5^-$, a halide, an acetate group ($CH_3COO^-$), an oxalate group ($C_2O_4^{2-}$) , a sulfate group ($SO_4^{2-}$), a phosphate group ($HPO_4^{2-}$), a tartrate group ($C4H_5O_6^-$);
q represents (n+1) or (n+1)/2 depending on whether X is a mono-anion (m=1) or a di-anion (m=2) respectively;
A, each either identical or different, represent an aryl group, a heteroaryl group, either monocyclic or polycyclic, optionally substituted with one or several groups selected from:

- a halogen (F, Cl, Br, I);
- a $C_1$-$C_{15}$, preferably $C_1$-$C_{10}$ alkyl;
- a ($C_1$-$C_5$)alkyl-aryl, preferably ($C_1$-$C_5$)alkyl-phenyl;
- a ($C_1$-$C_5$)alkyl-heteroaryl;
- a ($C_1$-$C_5$)alkyl-cycloalkyl;
- a ($C_1$-$C_5$)alkyl-heterocycle;
- a $((C_1$-$C_5)alkyl)_r$-O-(($C_1$-$C_5$)alkyl);
- $B(R^5)_2$;
- $N(R^6)_2$;
- $OR^7$;
- $O(CO)R^7$;
- $N(R^6)_3^+$,$T^-$;
- $NO_2$;
- $NHCOR^7$;
- $NHCSR^8$;
- $N=CHN(R^7)_2$;
- CN;
- $COOR^7$;
- $COR^7$;

- $CON(R^7)_2$;
- $COO^-Y^+$;
- $COSR^7$;
- $P(=Z)(R^{10})_2$;

r represents an integer between 1 and 5, preferably from 1 to 3;
$R^5$, either identical or different, represents H, OH, $R^6$;
$R^6$, either identical or different, represents H, an O-alkyl group, an OH group, an alkyl group, an aryl group, a heteroaryl group;
$R^7$, either identical or different, represents H, an alkyl group, an aryl group, a heteroaryl group;
$R^8$, either identical or different, represents an alkyl group, an aryl group, a heteroaryl group, $OR^7$, $NR^7$;
$R^9$, either identical or different, represents H, an alkyl group, an aryl group, a heteroaryl group, a $COR^7$ group, an $R^7C=NH$ group;
$R^{10}$, either identical or different, represents a group $R^6$, a group O-aryl, a group O-heteroaryl;
$T^-$, either identical or different, represents a halide, a sulfonate, a phosphinate, a phosphate, an anion from phosphorus, for example $PF_6^-$; an anion from antimony, for example $SbF_5^-$; an anion from boron, for example $BF_4^-$;
Y, either identical or different, represents an alkaline metal, an earth-alkaline metal, a transition metal, a lanthanide or an ammonium;
Z, either identical or different, represents O, S;
$R^3$ and $R^4$, each either identical or different, represent

- H;
- a halogen, for example F, Cl, Br, I;
- $B(R^5)_2$;
- $N(R^6)_2$;
- $OR^7$;
- $O(CO)R^7$;
- $N(R^6)_3^+,T^-$;
- $NO_2$;
- $NHCOR^7$;
- $NHCSR^8$;
- $N=CHN(R^7)_2$;
- CN;
- $COOR^7$;
- $COR^7$;
- $CON(R^7)_2$;
- $COO^-Y^+$;
- $P(=Z)(R^{10})_2$;

or $R^3$ and $R^4$ form with $X^2$ and $X^3$ a cycloalkyl group, a heterocycle group, an aryl group or a heteroaryl group;
$B^1$, each either identical or different, represents H, a halogen, $NHR^{11}$, OH;
$R^{11}$, either identical or different, represents $R^7$, $COR^7$, $COOR^7$, $Si(R^6)_3$.

**2.** The compound according to claim 1, wherein n represents 1 or 2.

**3.** The compound according to any of claims 1 or 2, wherein $R^1$ and $R^2$ represent an alkyl group, notably a $C_1$-$C_{10}$ alkyl group, for example a $C_1$-$C_5$ alkyl group, or form with M a monocycle for example with 5 to 6 members or a polycycle for example with 9 to 15 members, preferably a polycycle.

**4.** The compound according to any of claims 1 or 2, wherein $R^1$ and $R^2$ represent an alkyl group, notably a $C_1$-$C_{10}$ alkyl group, for example a $C_1$-$C_5$ alkyl group, or $R^1$ and $R^2$ form with M a polycycle with 9 members, preferably bicyclo[3.3.1]nonan-9-yl thereby forming the group

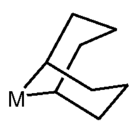
,

preferably

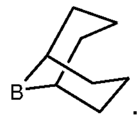

.

5. The compound according to any of claims 1 to 4, wherein A represents an aryl group, notably a $C_6$-$C_{12}$ aryl group or a heteroaryl group notably comprising from 5 to 13 members, either mono- or poly-cyclic, optionally substituted notably with:

- a $C_1$-$C_{15}$ alkyl group, preferably a $C_1$-$C_{10}$ alkyl group,
- a ($C_1$-$C_5$)alkyl-aryl group, preferably a ($C_1$-$C_5$)alkyl-phenyl group;
- a ($C_1$-$C_5$)alkyl-heteroaryl group;
- a ($C_1$-$C_5$)alkyl-cycloalkyl group;
- a ($C_1$-$C_5$)alkyl-heterocycle group or
- a group -(($C_1$-$C_5$)alkyl)$_r$O-(($C_1$-$C_5$)alkyl), r representing an integer between 1 and 5, preferably from 1 to 3.

6. The compound according to any of claims 1 to 4, wherein A represents an aryl group, notably a $C_6$-$C_{12}$ aryl group or a heteroaryl group notably comprising from 5 to 13 members, either mono- or poly-cyclic, optionally substituted notably with a $C_1$-$C_{15}$ alkyl group, preferably $C_1$-$C_{10}$ alkyl group, ($C_1$-$C_5$)alkyl-aryl group, preferably ($C_1$-$C_5$)alkyl-phenyl group; or a -(($C_1$-$C_5$)alkyl)$_r$O-(($C_1$-$C_5$)alkyl) group, r representing an integer between 1 and 5, preferably from 1 to 3.

7. The compound according to any of claims 1 to 4, wherein A represents a phenyl group, a pyridine group or a carbazole group optionally substituted notably with a $C_1$-$C_{15}$ alkyl group, preferably $C_1$-$C_{10}$ alkyl group, ($C_1$-$C_5$)alkyl-aryl group, preferably ($C_1$-$C_5$)alkylphenyl group; or a -(($C_1$-$C_5$)alkyl)$_r$O-(($C_1$-$C_5$)alkyl) group, r representing an integer between 1 and 5, preferably from 1 to 3.

8. The compound according to any of claims 1 to 7, wherein $R^3$ and $R^4$ represent H.

9. The compound according to any of claims 1 to 8, wherein $X^1$, $X^4$ represent N.

10. The compound according to any of claims 1 to 9, wherein one of $X^2$, $X^3$, represents N and the other one represents C or $X^2$ and $X^3$ represent C.

11. The compound according to any of claims 1 to 10, wherein $B^1$ represents H.

12. The compound according to claim 1 of formula (Ib)

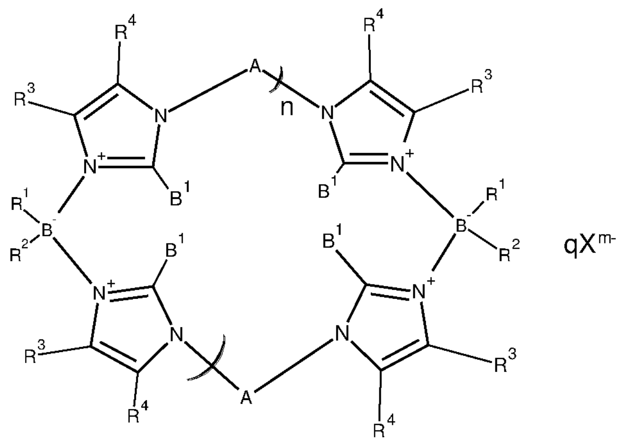

(Ib)

wherein

$B^1$, A, q, m, X, $R^1$, $R^2$, $R^3$ and $R^4$ have the definitions of claims 1 to 11, B represents boron.

**13.** The compound according to any of claims 1 to 12, wherein A represents:

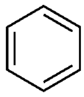 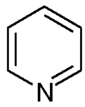 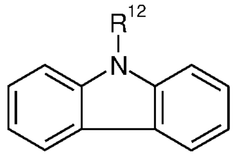,

preferably

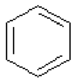 or 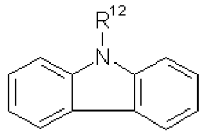,

$R^{12}$ represents a $C_1$-$C_{15}$ alkyl group, preferably $C_1$-$C_{10}$ alkyl group, ($C_1$-$C_5$)alkyl-aryl group, preferably ($C_1$-$C_5$)alkyl-phenyl or -(($C_1$-$C_5$)alkyl)$_r$-O-(($C_1$-$C_5$)alkyl) group, r representing an integer between 1 and 5, preferably from 1 to 3.

**14.** The use of the compounds according to any of claims 1 to 13 for quenching anions.

**15.** The use of the compounds according to any of claims 1 to 13 for detecting anions.

**16.** The use of the compounds according to claim 14 for treating a medium, notably for depolluting a liquid medium.

**17.** The use of the compound according to claim 15 for qualitative and quantitative analysis of a medium, notably of a liquid medium.

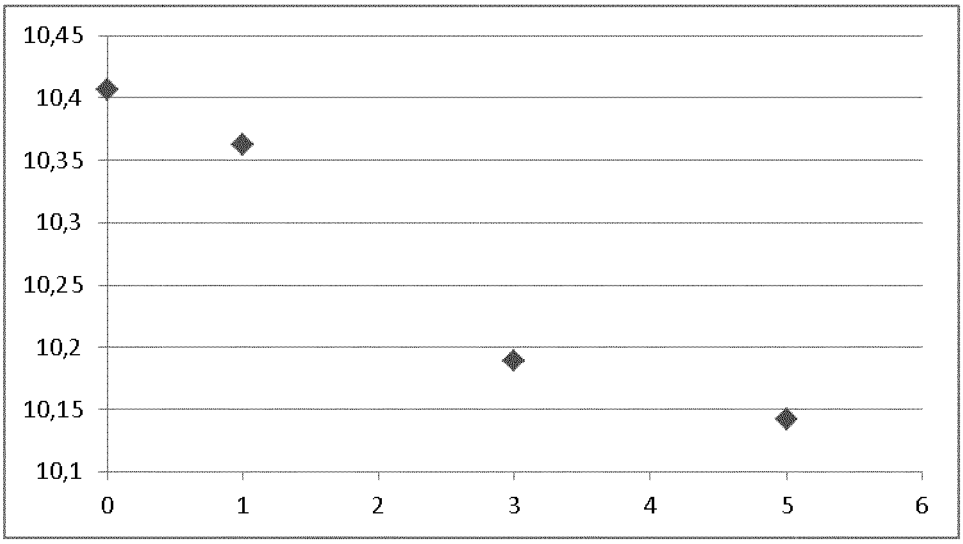
10,45
10,4
10,35
10,3
10,25
10,2
10,15
10,1
0
1
2
3
4
5
6

Fig.1

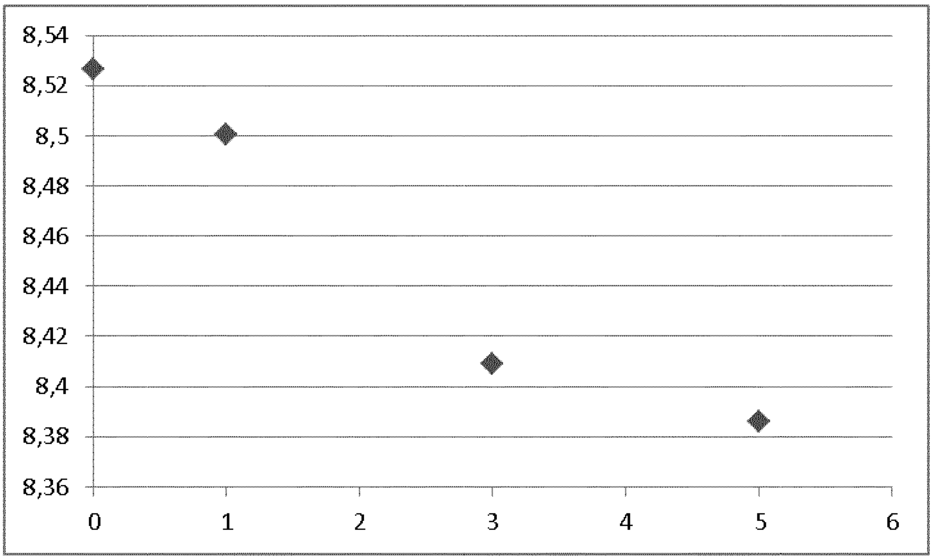
8,54
8,52
8,5
8,48
8,46
8,44
8,42
8,4
8,38
8,36
0
1
2
3
4
5
6

Fig.2

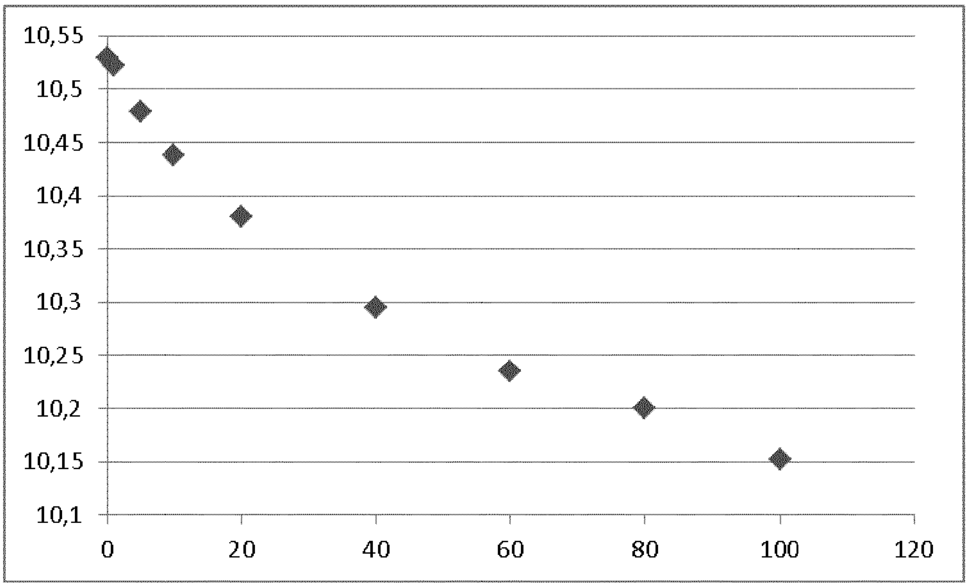
10,55
10,5
10,45
10,4
10,35
10,3
10,25
10,2
10,15
10,1
0
20
40
60
80
100
120

Fig.3

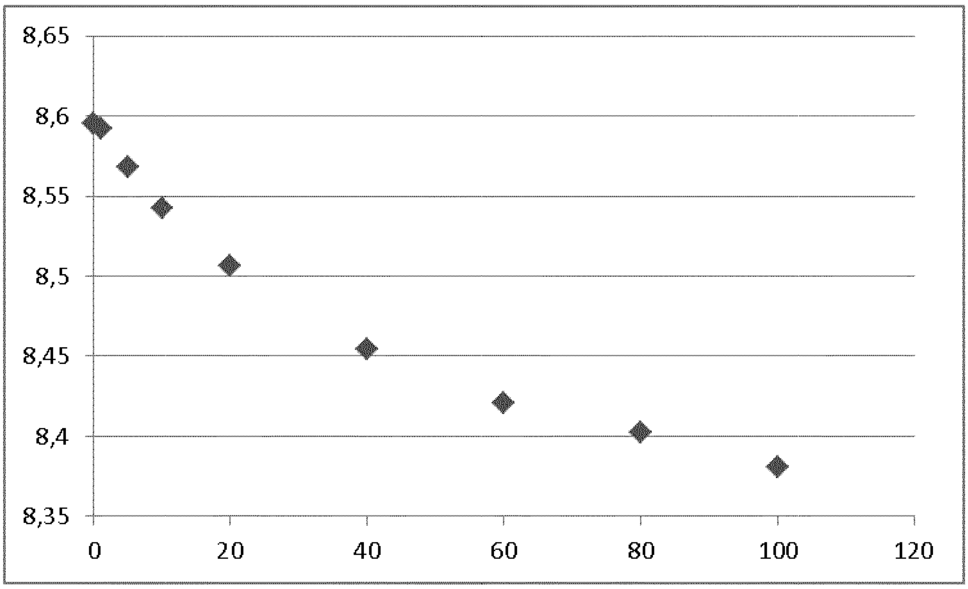
8,65
8,6
8,55
8,5
8,45
8,4
8,35
0
20
40
60
80
100
120

Fig.4

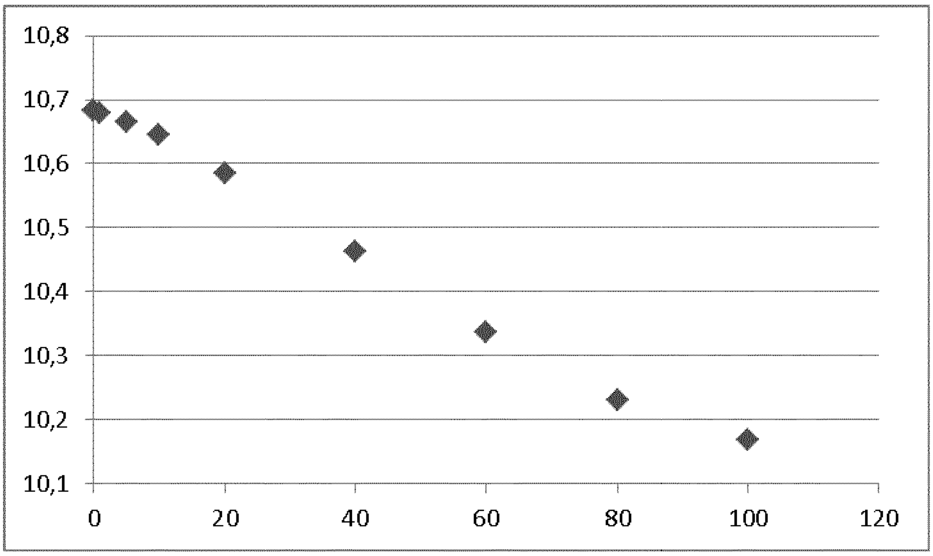
10,8
10,7
10,6
10,5
10,4
10,3
10,2
10,1
0
20
40
60
80
100
120

Fig.5

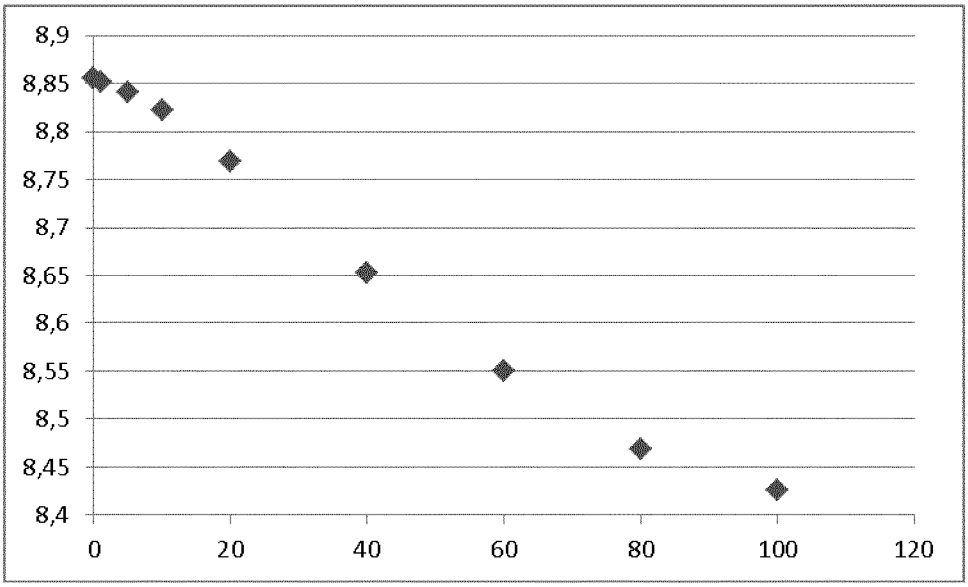
8,9
8,85
8,8
8,75
8,7
8,65
8,6
8,55
8,5
8,45
8,4
0
20
40
60
80
100
120

Fig.6

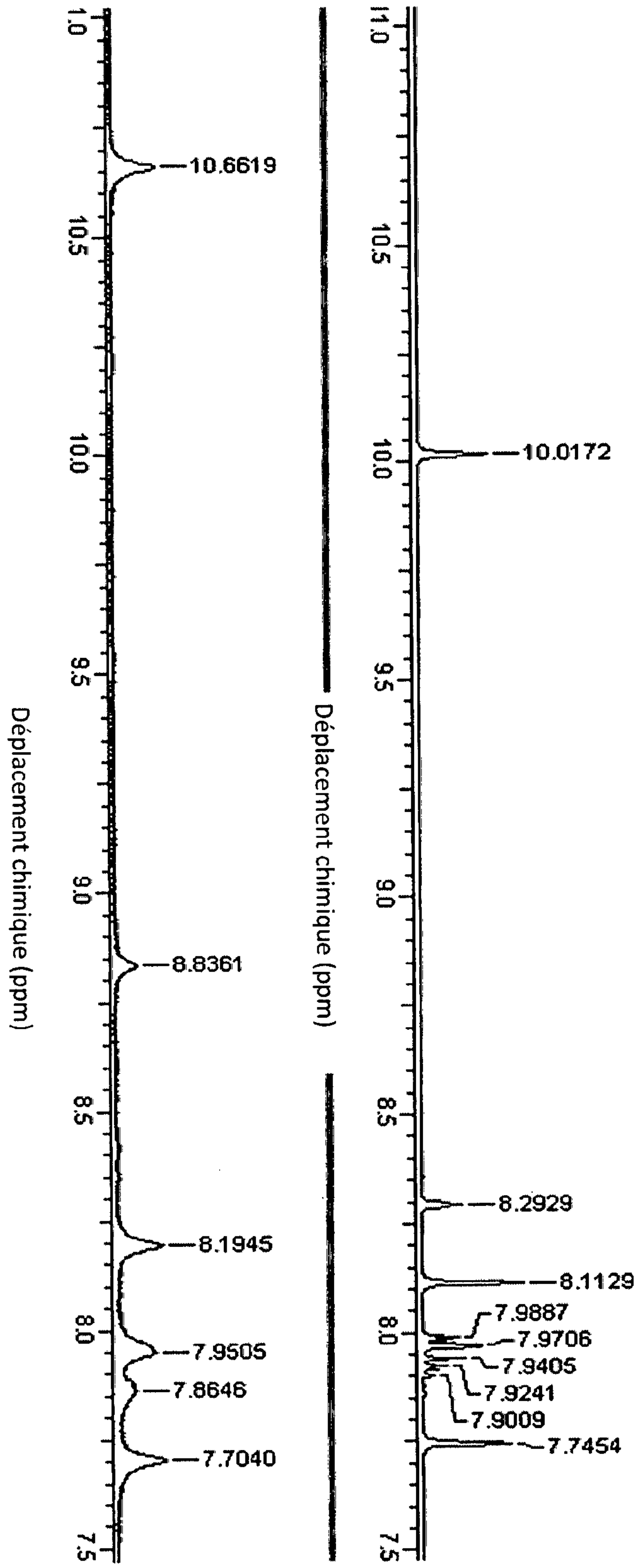
10.6619
8.8361
8.1945
7.9505
7.8646
7.7040
Déplacement chimique (ppm)
10.0172
8.2929
8.1129
7.9887
7.9706
7.9405
7.9241
7.9009
7.7454
Déplacement chimique (ppm)

Fig.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description


- **Y. SUN.** *Inorg. Chem.,* 2010, vol. 49, 4394-4404
- **S. YAMAGUCHI.** *J. Am. Chem. Soc.,* 2001, vol. 123, 11372-11375
- **N. CHRISTINAT.** *Angew. Chem. IEE,* 2008, vol. 47, 1848-1852
- **N. CHRISTINAT.** *Chem. Comm.,* 2004, 1158-1159
- **B. ICLI.** *Chem. Sci,* 2011, vol. 2, 1719-1721